(19) Europäisches Patentamt
European Patent Office
Office européen des brevets

(11) **EP 1 518 443 B1**

(12) # EUROPÄISCHE PATENTSCHRIFT

(45) Veröffentlichungstag und Bekanntmachung des Hinweises auf die Patenterteilung:
**22.03.2006 Patentblatt 2006/12**

(51) Int Cl.:
*H04S 3/00* (2006.01)   *A63F 13/02* (2006.01)
*H04N 7/15* (2006.01)

(21) Anmeldenummer: **04703775.9**

(22) Anmeldetag: **21.01.2004**

(86) Internationale Anmeldenummer:
**PCT/EP2004/000463**

(87) Internationale Veröffentlichungsnummer:
**WO 2004/073352 (26.08.2004 Gazette 2004/35)**

(54) **VORRICHTUNG UND VERFAHREN ZUM BESTIMMEN EINER WIEDERGABEPOSITION**

DEVICE AND METHOD FOR DETERMINING A REPRODUCTION POSITION

DISPOSITIF ET PROCEDE POUR DETERMINER UNE POSITION DE REPRODUCTION

(84) Benannte Vertragsstaaten:
**DE FR GB NL**

(30) Priorität: **12.02.2003 DE 10305820**

(43) Veröffentlichungstag der Anmeldung:
**30.03.2005 Patentblatt 2005/13**

(73) Patentinhaber: **Fraunhofer-Gesellschaft zur Förderung der angewandten Forschung e.V.**
**80686 München (DE)**

(72) Erfinder:
• **MELCHIOR, Frank**
  **98693 Ilmenau (DE)**
• **BRIX, Sandra**
  **98693 Ilmenau (DE)**

(74) Vertreter: **Zinkler, Franz et al**
**Schoppe, Zimmermann, Stöckeler & Zinkler**
**Postfach 246**
**82043 Pullach bei München (DE)**

(56) Entgegenhaltungen:
| WO-A-02/052897 | US-A- 4 179 713 |
| US-A- 5 778 082 | US-A- 5 862 229 |

• BOONE M M ET AL: "ON THE APPLICABILITY OF DISTRUBUTED MODE LOUDSPEAKER PANELS FOR WAVE FIELD SYNTHESIS BASED SOUND REPRODUCTION" PREPRINTS OF PAPERS PRESENTED AT THE AES CONVENTION, Februar 2000 (2000-02), Seiten 1-9, XP001023901

## EP 1 518 443 B1

**Beschreibung**

Die vorliegende Erfindung bezieht sich auf Audiowiedergabetechniken und insbesondere auf Audiowiedergabetechniken, die für Wellenfeldsynthesemodule geeignet sind, um eine auf eine Videowiedergabe abgestimmte Schallquellenpositionierung vorzunehmen.

Es besteht ein steigender Bedarf an neuen Technologien und innovativen Produkten im Bereich der Unterhaltungselektronik. Dabei ist es eine wichtige Voraussetzung für den Erfolg neuer multimedialer Systeme, optimale Funktionalitäten bzw. Fähigkeiten anzubieten. Erreicht wird das durch den Einsatz digitaler Technologien und insbesondere der Computertechnik. Beispiele hierfür sind die Applikationen, die einen verbesserten realitätsnahen audiovisuellen Eindruck bieten. Bei bisherigen Audiosystemen liegt ein wesentlicher Schwachpunkt in der Qualität der räumlichen Schallwiedergabe von natürlichen, aber auch von virtuellen Umgebungen.

Verfahren zur mehrkanaligen Lautsprecherwiedergabe von Audiosignalen sind seit vielen Jahren bekannt und standardisiert. Alle üblichen Techniken besitzen den Nachteil, dass sowohl der Aufstellungsort der Lautsprecher als auch die Position des Hörers dem Übertragungsformat bereits eingeprägt sind. Bei falscher Anordnung der Lautsprecher im Bezug auf den Hörer leidet die Audioqualität deutlich. Ein optimaler Klang ist nur in einem kleinen Bereich des Wiedergaberaums, dem so genannten Sweet Spot, möglich.

Ein besserer natürlicher Raumeindruck sowie eine stärkere Einhüllung bei der Audiowiedergabe kann mit Hilfe einer neuen Technologie erreicht werden. Die Grundlagen dieser Technologie, die so genannte Wellenfeldsynthese (WFS; WFS = Wave-Field Synthesis), wurden an der TU Delft erforscht und erstmals in den späten 80er-Jahren vorgestellt (Berkhout, A.J.; de Vries, D.; Vogel, P.: Acoustic control by Wave-field Synthesis. JASA 93, 1993).

Infolge der enormen Anforderungen dieser Methode an Rechnerleistung und Übertragungsraten wurde die Wellenfeldsynthese bis jetzt nur selten in der Praxis angewendet. Erst die Fortschritte in den Bereichen der Mikroprozessortechnik und der Audiocodierung gestatten heute den Einsatz dieser Technologie in konkreten Anwendungen. Erste Produkte im professionellen Bereich werden nächstes Jahr erwartet. In wenigen Jahren sollen auch erste Wellenfeldsynthese-Anwendungen für den Konsumerbereich auf den Markt kommen.

Die Grundidee von WFS basiert auf der Anwendung des Huygens'schen Prinzips der Wellentheorie:

Jeder Punkt, der von einer Welle erfasst wird, ist Ausgangspunkt einer Elementarwelle, die sich kugelförmig bzw. kreisförmig ausbreitet.

Angewandt auf die Akustik kann durch eine große Anzahl von Lautsprechern, die nebeneinander angeordnet sind (einem so genannten Lautsprecherarray), jede beliebige Form einer einlaufenden Wellenfront nachgebildet werden. Im einfachsten Fall, einer einzelnen wiederzugebenden Punktquelle und einer linearen Anordnung der Lautsprecher, müssen die Audiosignale eines jeden Lautsprechers mit einer Zeitverzögerung und Amplitudenskalierung so gespeist werden, dass sich die abgestrahlten Klangfelder der einzelnen Lautsprecher richtig überlagern. Bei mehreren Schallquellen wird für jede Quelle der Beitrag zu jedem Lautsprecher getrennt berechnet und die resultierenden Signale addiert. Befinden sich die wiederzugebenden Quellen in einem Raum mit reflektierenden Wänden, dann müssen auch Reflexionen als zusätzliche Quellen über das Lautsprecherarray wiedergegeben werden. Der Aufwand bei der Berechnung hängt daher stark von der Anzahl der Schallquellen, den Reflexionseigenschaften des Aufnahmeraums und der Anzahl der Lautsprecher ab.

Der Vorteil dieser Technik liegt im Besonderen darin, dass ein natürlicher räumlicher Klangeindruck über einen großen Bereich des Wiedergaberaums möglich ist. Im Gegensatz zu den bekannten Techniken werden Richtung und Entfernung von Schallquellen sehr exakt wiedergegeben. In beschränktem Maße können virtuelle Schallquellen sogar zwischen dem realen Lautsprecherarray und dem Hörer positioniert werden.

Obgleich die Wellenfeldsynthese für Umgebungen gut funktioniert, deren Beschaffenheiten bekannt sind, treten doch Unregelmäßigkeiten auf, wenn sich die Beschaffenheit ändert bzw. wenn die Wellenfeldsynthese auf der Basis einer Umgebungsbeschaffenheit ausgeführt wird, die nicht mit der tatsächlichen Beschaffenheit der Umgebung übereinstimmt.

Die Technik der Wellenfeldsynthese kann jedoch ebenfalls vorteilhaft eingesetzt werden, um eine visuelle Wahrnehmung um eine entsprechende räumliche Audiowahrnehmung zu ergänzen. Bisher stand bei der Produktion in virtuellen Studios die Vermittlung eines authentischen visuellen Eindrucks der virtuellen Szene im Vordergrund. Der zum Bild passende akustische Eindruck wird in der Regel durch manuelle Arbeitsschritte in der sogenannten Postproduktion nachträglich dem Audiosignal aufgeprägt oder als zu aufwendig und zeitintensiv in der Realisierung eingestuft und daher vernachlässigt. Dadurch kommt es üblicherweise zu einem Widerspruch der einzelnen Sinnesempfindungen, der dazu führt, daß der entworfene Raum, d. h. die entworfene Szene, als weniger authentisch empfunden wird.

In der Fachveröffentlichung "Subjective experiments on the effects of combining spatialized audio and 2D video projection in audio-visual systems", W. de Bruijn und M. Boone, AES convention paper 5582, 10. bis 13. Mai 2002, München, werden subjektive Experimente bezüglich der Auswirkungen des Kombinierens von räumlichem Audio und einer zweidimensionalen Videoprojektion in audiovisuellen Systemen dargestellt. Insbesondere wird hervorgehoben, daß zwei in einer unterschiedlichen Entfernung zu einer Kamera stehende Sprecher, die nahezu hintereinander stehen, von einem Betrachter besser verstanden werden können, wenn mit Hilfe der Wellenfeldsynthese die zwei hintereinander stehenden Personen als unterschiedliche virtuelle Schallquellen aufgefaßt und rekonstruiert werden. In diesem Fall hat sich durch subjektive Tests herausgestellt, daß ein Zuhörer die beiden gleichzeitig sprechenden Sprecher getrennt voneinander besser verstehen und unterscheiden kann.

In einem Tagungsbeitrag zum 46. internationalen wissenschaftlichen Kologschium in Ilmenau vom 24. bis 27. September 2001 mit dem Titel "Automatisierte Anpassung der Akustik an virtuelle Räume", U. Reiter, F. Melchior und C. Seidel, wird ein Ansatz vorgestellt, Tonnachbearbeitungsprozesse zu automatisieren. Hierzu werden die für die Visualisierung notwendigen Parameter eines Film-Sets, wie z. B. Raumgröße, Textur der Oberflächen oder Kameraposition und Position der Akteure auf ihre akustische Relevanz hin überprüft, woraufhin entsprechende Steuerdaten generiert werden. Diese beeinflussen dann automatisiert die zur Postproduktion eingesetzten Effekt- und Nachbearbeitungsprozesse, wie z. B. die Anpassung der Sprecherlautstärkenabhängigkeit von der Entfernung zur Kamera oder die Nachhallzeit in Abhängigkeit von Raumgröße und Wandbeschaffenheit. Hierbei besteht das Ziel darin, den visuellen Eindruck einer virtuellen Szene für eine gesteigerte Realitätsempfindung zu verstärken.

Es soll ein "Hören mit den Ohren der Kamera" ermöglicht werden, um eine Szene echter erscheinen zu lassen. Hierbei wird eine möglichst hohe Korrelation zwischen Schallereignisort im Bild und Hörereignisort im Surroundfeld angestrebt. Das bedeutet, daß Schallquellenpositionen ständig einem Bild angepaßt sein sollen. Kameraparameter, wie z. B. Zoom, sollen in die Tongestaltung ebenso mit einbezogen werden wie eine Position von zwei Lautsprechern L und R. Hierzu werden Trackingdaten eines virtuellen Studios zusammen mit einem zugehörigen Timecode vom System in eine Datei geschrieben. Gleichzeitig werden Bild, Ton und Timecode auf einer MAZ aufgezeichnet. Das Camdump-File wird zu einem Computer übertragen, der daraus Steuerdaten für eine Audioworkstation geniert und synchron zum von der MAZ stammenden Bild über eine MIDI-Schnittstelle ausgibt. Die eigentliche Audiobearbeitung wie Positionierung der Schallquelle im Surroundfeld und Einfügen von frühen Reflexionen und Nachhall findet innerhalb der Audioworkstation statt. Das Signal wird für ein 5.1-Surround-Lautsprechersystem aufbereitet.

Kamera-Tracking-Parameter genauso wie Positionen von Schallquellen im Aufnahme-Setting können bei realen Film-Sets aufgezeichnet werden. Solche Daten können auch in virtuellen Studios erzeugt werden.

In einem virtuellen Studio steht ein Schauspieler oder Moderator allein in einem Aufnahmeraum. Insbesondere steht er vor einer blauen Wand, die auch als Blue-Box oder Blue-Panel bezeichnet wird. Auf diese Blauwand ist ein Muster aus blauen und hellblauen Streifen aufgebracht. Das besondere an diesem Muster ist, daß die Streifen unterschiedlich breit sind und sich somit eine Vielzahl von Streifen-Kombinationen ergeben. Aufgrund der einmaligen Streifen-Kombinationen auf der Blauwand ist es bei der Nachbearbeitung, wenn die Blauwand durch einen virtuellen Hintergrund ersetzt wird, möglich, genau zu bestimmen, in welche Richtung die Kamera blickt. Mit Hilfe dieser Informationen kann der Rechner den Hintergrund für den aktuellen Kamerablickwinkel ermitteln. Ferner werden Sensoren an der Kamera ausgewertet, die zusätzliche Kameraparameter erfassen und ausgeben. Typische Parameter einer Kamera, die mittels Sensorik erfaßt werden, sind die drei Translationsgrade x, y, z, die drei Rotationsgrade, die auch als Roll, Tilt, Pan bezeichnet werden, und die Brennweite bzw. der Zoom, der gleichbedeutend mit der Information über den Öffnungswinkel der Kamera ist.

Damit die genaue Position der Kamera auch ohne Bilderkennung und ohne aufwendige Sensortechnik bestimmt werden kann, kann man auch ein Tracking-System einsetzen, das aus mehreren Infrarot-Kameras besteht, die die Position eines an der Kamera befestigten Infrarot-Sensors ermitteln. Somit ist auch die Position der Kamera bestimmt. Mit den von der Sensorik gelieferten Kameraparametern und den von der Bilderkennung ausgewerteten Streifen-Informationen kann ein Echtzeitrechner nun den Hintergrund für das aktuelle Bild berechnen. Hierauf wird der Blau-Farbton, den der blaue Hintergrund hatte, aus dem Bild entfernt, so daß statt dem blauen Hintergrund der virtuelle Hintergrund eingespielt wird.

In der Mehrzahl der Fälle wird ein Konzept verfolgt, bei dem es darum geht, einen akustischen Gesamteindruck der visuell abgebildeten Szenerie zu bekommen. Dieses lässt sich gut mit dem aus der Bildgestaltung stammenden Begriff der "Totalen" umschreiben. Dieser "totale" Klangeindruck bleibt meist über alle Einstellungen in einer Szene konstant, obwohl sich der optische Blickwinkel auf die Dinge meist stark ändert. So werden optische Details durch entsprechende Einstellungen herausgehoben oder in den Hintergrund gestellt. Auch Gegenschüsse bei der filmischen Dialoggestaltung werden vom Ton nicht nachvollzogen.

Daher besteht der Bedarf, den Zuschauer akustisch in eine audiovisuelle Szene einzubetten. Hierbei bildet die Leinwand oder Bildfläche die Blickrichtung und den Blickwinkel des Zuschauers. Dies bedeutet, daß der Ton dem Bild in der Form nachgeführt werden soll, daß er stets mit dem gesehenen Bild übereinstimmt. Dies wird insbesondere für virtuelle Studios noch wichtiger, da es typischerweise keine Korrelation zwischen dem Ton der Moderation beispielsweise und der Umgebung gibt, in der sich der Moderator gerade befindet. Um einen audiovisuellen Gesamteindruck der Szene zu bekommen, muß ein zum gerenderten Bild passender Raumeindruck simuliert werden. Eine wesentliche subjektive Eigenschaft bei einem solchen klanglichen Konzept ist in diesem Zusammenhang der Ort einer Schallquelle, wie ihn ein Betrachter beispielsweise einer Kinoleinwand empfindet.

Die Aufgabe der vorliegenden Erfindung besteht darin, ein Konzept zum Bestimmen einer Wiedergabeposition einer Schallquelle für eine audiovisuelle Wiedergabe einer Filmszene zu schaffen, welches auf effiziente Art und Weise eine Abbildung einer Schallquellenposition von der Aufnahme zur Wiedergabe schafft.

Diese Aufgabe wird durch eine Vorrichtung gemäß Patentanspruch 1, ein Verfahren gemäß Patentanspruch 20, ein Computer-Programm gemäß Patentanspruch 21 oder eine Vorrichtung zur Audiowiedergabe einer Filmszene gemäß Patentanspruch 22 gelöst.

Der vorliegenden Erfindung liegt die Erkenntnis zugrunde, daß das Kamerakoordinatensystem, also das Koordinatensystem, in dem die Kamera eine Aufnahme in einem virtuellen Studio oder in einem realen Setting durchführt, mit einem Wiedergabekoordinatensystem, das durch eine Wiedergabefläche, die beispielsweise eine Kinoleinwand sein kann, und einer Wiedergabequelle, die beispielsweise ein Filmprojektor in einem Kino sein kann, gewissermaßen verschmolzen werden, um eine realistische Schallquellenpositionierung in dem Wiedergabesystem basierend auf dem Aufnahmesystem zu schaffen. Von wesentlicher Bedeutung ist hierbei, daß die Zoom-Einstellung der Kamera bei der Aufnahme für die Wiedergabe berücksichtigt wird. Hierbei wird erfindungsgemäß von einer Standard-Zoomeinstellung, d. h. von einem Standard-Öffnungswinkel der Kamera ausgegangen, der vorzugsweise gleich dem Öffnungswinkel des optischen Systems eines Betrachters eingestellt wird.

Das menschliche Sehsystem hat einen festen Öffnungswinkel, der in etwa bei 27 Grad liegt. Es ist bekannt, daß das Auge keine Zoom-Funktion hat. Der Öffnungswinkel des Auges ist daher immer fest vorgegeben. Wird der Öffnungswinkel der Kamera gleich dem Öffnungswinkel des Auges eingestellt, wird also eine 1:1-Abbildung einer Aufnahmeszene zu einer Wiedergabeszene erhalten, so werden sämtliche Winkel und Strecken für einen optimalen Betrachtungspunkt unverzerrt wiedergegeben.

Weiterhin wird erfindungsgemäß eine Projektionskugel definiert, die durch den horizontalen Standard-Öffnungswinkel und eine horizontale Breitenabmessung der Wiedergabefläche vorgegeben ist. Ist die Zoom-Einstellung der Kamera gleich dem Öffnungswinkel des Wiedergabesystems im optimalen Viewpoint, so wird die Kameraöffnung gleich der Projektoröffnung gesetzt. Wird dagegen der Öffnungswinkel der Kamera im Hinblick auf den Standard-Öffnungswinkel verändert, so rücken die Projektoröffnung und die Kameraöffnung auseinander.

An dieser Stelle sei darauf hingewiesen, dass die Projektoröffnung keineswegs gleich der Standardöffnung des Auges bzw. der Kamera sein muss. Wird beispielsweise ein Projektor mit einem kleineren Öffnungswinkel weiter weg von der Leinwand platziert, so wird dadurch erreicht, dass der Projektor trotz des kleineren Winkels die gesamte Leinwand ausfüllt, deren Größe und Position normalerweise fest vorgegeben ist. Der optimale Viewpoint rückt dann von der Projektoröffnung weg und ist zwischen der Projektoröffnung und der Leinwand angeordnet. Der genaue optimale Viewpoint ergibt sich für den Platz vor der Leinwand, bei dem ein Betrachter sitzt, der den Standardöffnungswinkel hat und gerade die gesamte Leinwandbreite sieht, also genau die gesamte Leinwandbreite in seinem Öffnungswinkel hat.

Erfindungsgemäß wird ferner unterschieden, ob eine Schallquelle auf einer Wiedergabefläche erscheint, also von einem Kinobetrachter zu sehen ist, oder ob eine Schallquelle unsichtbar ist. Unterhalten sich beispielsweise zwei Personen, während die Kamera auf eine Person gerichtet ist, so muß für eine realistische Wiedergabe selbstverständlich auch die andere Person als Schallquelle positioniert werden, da im audiovisuellen Gesamteindruck zwar nur eine Person sichtbar ist, die Geräusche der anderen Person jedoch für den Betrachter hörbar sind. Erfindungsgemäß wird in dem Fall, in dem eine Schallquelle sichtbar ist, die Berechnung der Wiedergabeposition basierend auf der Position der Schallquelle auf der Leinwand durchgeführt, während dann, wenn eine Schallquelle nicht sichtbar ist, basierend auf einer Position auf der Projektionskugel gerechnet wird, um die Wiedergabeposition zu erhalten.

Das erfindungsgemäße Konzept ist dahingehend vorteilhaft, daß eine realistische Schallquellenpositionierung erreicht wird, die einerseits visuell unsichtbare, jedoch akustisch hörbare Schallquellen berücksichtigt, und die andererseits auch darauf Rücksicht nimmt, daß die Einstellung des Öffnungswinkels der Kamera von dem Standard-Öffnungswinkel abweichen kann.

Das erfindungsgemäße Konzept ist ferner dahingehend vorteilhaft, daß es unter Verwendung eines Rechners automatisierbar ist, was dazu beiträgt, daß ein solches System in Echtzeit ablaufen kann und damit Verbreitung finden kann.

Ein weiterer Vorteil der vorliegenden Erfindung besteht darin, daß lediglich Eingabedaten benötigt werden, die leicht verfügbar sind. Im Hinblick auf die Aufnahme sind dies eine Schallquellenposition im Aufnahme-Setting, eine Kameraposition im Aufnahme-Setting und ein Öffnungswinkel der Kamera. Im Hinblick auf die Wiedergabe-Gegebenheiten sind dies die Breite einer Wiedergabeleinwand sowie optional ein Öffnungswinkel eines Wiedergabegeräts, der normalerweise vorgegeben ist durch die technischen Gegebenheiten eines Wiedergabegeräts, die Breite einer Wiedergabefläche und den Abstand der Wiedergabefläche von der Wiedergabequelle vorgegeben ist.

Erfindungsgemäß wird daher eine exakte Positionierung von Schallquellen in einer Wiedergabe-Umgebung erreicht, um eine Wiedergabeszene an unterschiedliche Aufnahmesituationen anzupassen.

Schließlich ist die vorliegende Erfindung dahingehend vorteilhaft, dass aufgrund der beiden Fallunterscheidungen, die zur Unterscheidung von insgesamt vier Fällen führt, die Schallquellenpositionierung transparent, flexibel, aufwandsarm und insbesondere hinsichtlich der Berücksichtigung verschiedener Genauigkeitsanforderungen skalierbar ist.

Dabei existieren verschieden Möglichkeiten, wie mit den Schnittpunkten mit der Leinwand oder der Projektionskugel umgegangen werden kann. Für eine einfache und damit aufwandsärmer durchzuführende Berechnung kann die Schallquelle ohne Berücksichtigung der Länge des Schallquellenvektors im Falle des Standardöffnungswinkels auf der Leinwand bzw. der Projektionskugel platziert werden. Im Falle eines abweichenden Öffnungswinkels kann die Strecke und die Differenz ausgehend von diesem Wert berechnet werden.

Für eine genauere aber aufwändigere Berechnung wird die Länge des Schallquellenvektors im Aufnahmesetting berücksichtigt, um selbst bei vorliegendem Standardöffnungswinkel der Kamera durch Skalierung des Vektors zum Schnittpunkt mit Leinwand bzw. Kugel, um denselben in seiner Länge gleich dem Schallquellenvektor aus dem Kamerasetting zu machen, die Schallquelle vor bzw. hinter die Leinwand bzw. Projektionskugel zu setzen. Falls der Öffnungswinkel der Kamera von dem Standardöffnungswinkel abweicht, wird die Wiedergabeposition der Schallquelle ausgehend von einer Position vor bzw. hinter der Leinwand bzw. Kugel um die Differenz verschoben.

Alternativ kann, um den optimalen Viewpoint zu vergrößern, die Plazierung der Schallquelle vor bzw. hinter die Leinwand und/oder die Verschiebung der Schallquelle aufgrund einer Zoom/Weitwinkel-Einstellung nichtlinear vorgenommen werden, wobei hierbei auch Schwellen verwendet werden können, dahingehend, dass eine Verschiebung der Schallquelle vor bzw. hinter die Leinwand bzw. Projektionskugel nur bis zu einem wählbaren Maximalbetrag zugelassen wird.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockdiagramm einer erfindungsgemäßen Vorrichtung zum Bestimmen einer Wiedergabeposition einer Schallquelle;

Fig. 2    eine detailliertere Darstellung der Einrichtung zum Berechnen der Wiedergabeposition von Fig. 1;

Fig. 3    eine schematische Darstellung zur Erläuterung der Berechnung der Wiedergabeposition bei einer Standard-Zoom-Einstellung der Kamera und einer Schallquelle im Sichtfeld der Kamera;

Fig. 4    eine Fig. 3 ähnliche Darstellung, in der zusätzlich eine Schallquelle außerhalb des Sichtfelds der Kamera eingezeichnet ist;

Fig. 5    eine schematische Darstellung zur Erläuterung der Berechnung der Wiedergabeposition bei einer von der Standardeinstellung abweichenden Zoom-Einstellung der Kamera, wobei die Schallquelle außerhalb des Sichtfelds der Kamera ist;

Fig. 6    eine Fig. 5 ähnliche Darstellung, wobei zusätzlich eine im Sichtfeld der Kamera befindliche Schallquelle eingezeichnet ist;

Fig. 7    eine schematische Darstellung der Beziehung eines Weltkoordinatensystems zu einem Kamerakoordinatensystem; und

Fig. 8    eine schematische Darstellung eines Wiedergaberaums mit einem Filmprojektor und einem Array von Lautsprechern zur Rekonstruktion von virtuellen Schallquellen im Wiedergaberaum unter Verwendung der Wellenfeldsynthese.

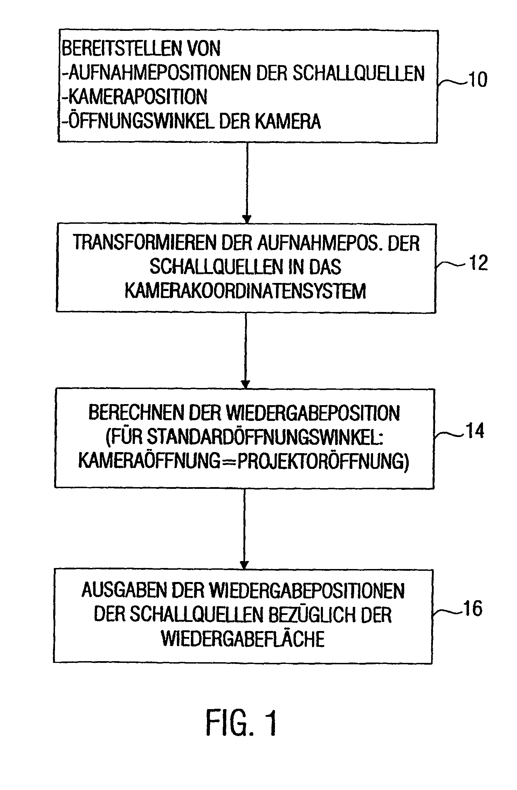

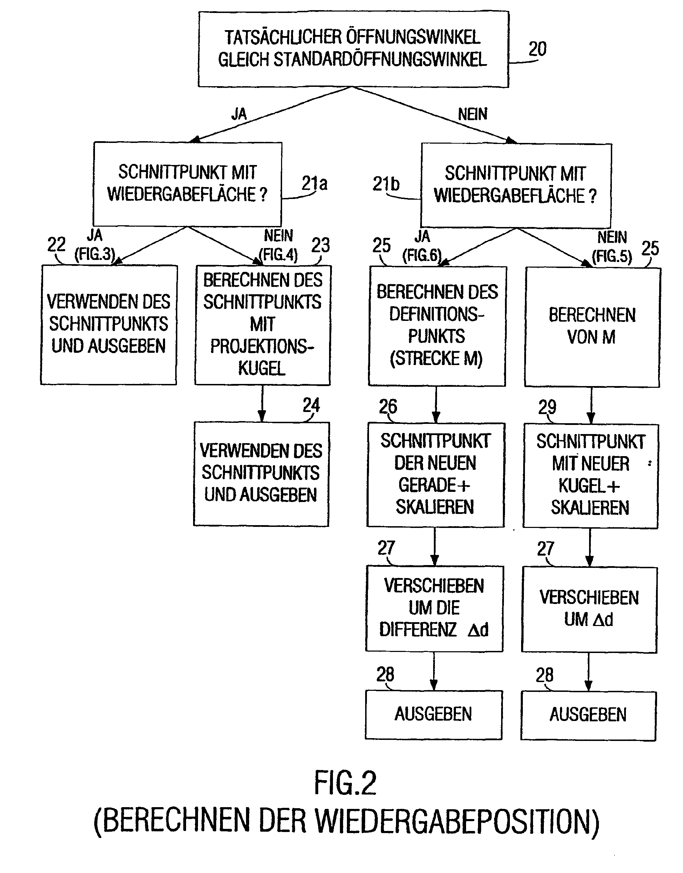

Fig. 1 zeigt ein Übersichts-Blockdiagramm der erfindungsgemäßen Vorrichtung zum Bestimmen einer Wiedergabeposition, wobei Fig. 2 eine detailliertere Darstellung der Einrichtung zum Berechnen der Wiedergabeposition von Fig. 1 zeigt.

Im einzelnen dient die in Fig. 1 gezeigte erfindungsgemäße Vorrichtung bzw. das in Fig. 1 schematisch dargestellte erfindungsgemäße Verfahren zum Bestimmen einer Wiedergabeposition einer Schallquelle für eine audiovisuelle Wiedergabe einer Filmszene aus einer Mehrzahl von Einzelbildern oder Frames bezüglich einer Wiedergabefläche mit einer vorbestimmten Breite und einer Projektionsquelle mit einem Projektionsbezugspunkt. Die Wiedergabefläche kann beispielsweise die Leinwand in einem Kino sein. Die Leinwandbreite wird von Kino zu Kino variieren. Auf jeden Fall ist sie jedoch vorbestimmt, d. h. durch das einzelne Kino gegeben. Die Projektionsquelle kann ein Kinofilmprojektor sein, wie er üblicherweise in Kinos oder in anderen Einrichtungen eingesetzt wird. Alternativ kann die Projektionsquelle auch ein sogenannter Beamer sein, der ein Computer-generiertes Bild direkt in ein Projektionsbild umsetzt, ohne daß das Bild als Kinofilmrolle beispielsweise vorliegt. Unabhängig davon, ob die Projektionsquelle ein Kinoprojektor oder ein Beamer ist, ist für jede Projektionsquelle ein Projektionsbezugspunkt definierbar, in dem sich alle Strahlen, die von der Projektionsquelle zu einer Leinwand geschickt werden und auf die Leinwand auftreffen, schneiden. Entsprechend ist auch ein Bezugspunkt einer Kamera definierbar, der am besten dadurch veranschaulicht werden kann, wenn die Kamera durch ein Modell einer Lochkamera angenähert wird. Eine Lochkamera ist eine sehr einfache Kamera ohne Optiksystem, bei der ein Film über ein kleines Loch belichtbar ist. Auch für eine typische Kamera mit einem komplexen Linsensystem ist eine Kameraöffnung dahingehend definierbar, daß alle Strahlen, die in einem Öffnungswinkel der Kamera in das Objektiv einfallen und auf ein hinter dem Objektiv angeordnetes Wandlersystem auftreffen, sich in einem Punkt, nämlich der Kameraöffnung schneiden. Das Wandlersystem kann ein unbelichteter Film, ein CCD-Array oder irgend etwas derartiges sein, das eine auftreffende Lichtinformation speichert und zur Weiterverarbeitung nutzbar macht.

Die erfindungsgemäße Vorrichtung umfaßt zunächst eine Einrichtung 10 zum Bereitstellen von Aufnahmepositionen von Schallquellen, einer Kameraposition und des Öffnungswinkels der Kamera bei der Aufnahme. Es sei darauf hingewiesen, daß es bevorzugt wird, diese Informationen, nämlich die Aufnahmeposition der Schallquelle, die Kameraposition und den Öffnungswinkel der Kamera für jedes Einzelbild abzuspeichern. Von dieser Vorgabe sollte lediglich dann abgewichen werden, wenn sich von Bild zu Bild nichts ändert, wenn also eine Serie von Einzelbildern dieselbe Kameraposition, dieselbe Schallquellenposition und denselben Öffnungswinkel haben.

Die Positionen der Schallquellen können mit Hilfe eines Tracking-Systems erfaßt werden. Nur so ist es möglich, daß sie sich im Verlauf einer Einstellung bewegen können und die Position automatisiert nachgeführt werden kann. Dieses Tracking-System kann für jeden Frame die Koordinaten der Schallquelle an den Algorithmus zur Berechnung der Schallquellenposition bezogen auf den Kamerastandpunkt weitergeben. Beispielhafte virtuelle Studiosysteme erlauben es, dies mittels Infrarot-Sendern/Empfängern zu tun, die beispielsweise an den Moderatoren befestigt werden und es so ermöglichen, daß diese sich auch hinter Objekte im virtuellen Raum bewegen können.

Bezüglich der Kameraparameter sei darauf hingewiesen, daß es die Datengewinnung des direkten Trackings gibt und die Datengewinnung mit nachträglichem Tracking. So können beim nachträglichen Tracking beliebige Punkte eines Bild getrackt werden und die gewonnenen Daten in einer Textdatei gespeichert werden. Außerdem kann, basierend auf diesen Daten, aus einem zweidimensionalen Bild eine in der realen Aufnahme durchgeführte beliebige Kamerabewegung errechnet werden. Diese kann dann exportiert werden und bereitgestellt werden. In der Filmproduktion werden diese Werkzeuge bisher dazu verwendet, ein sogenanntes Compositing durchzuführen, d. h. die Kombination von realen mit Computer generierten Bildern.

Beim direkten Tracking wird die Position der Kamera und werden die Positionen der Schallquellen während der Bildaufnahme verfolgt und aufgezeichnet. Dieses Verfahren kann in Systemen mit Mustererkennung und in Sensor-basierten Systemen implementiert werden. Auch bei solchen Systemen können die Trackingdaten aufgezeichnet oder live über eine Netzwerkverbindung übertragen werden. Eine weitere Verwendungsmöglichkeit dieser, bisher nur im Broadcastbereich eingesetzten, Technologie ist der Einsatz während der Produktionsphase eines Films zur Previsualisierung am Set. Damit ist es möglich, reale Szenen, die vor einer Blue Screen aufgenommen werden, schon am Set mit einer Hintergrundvorschau zu versehen. Dadurch wird dem Regisseur die Möglichkeit gegeben, die Wirkung der Szene besser einschätzen zu können. Gleichzeitig kann dann das zuweilen mühsame Prozedere zur nachträglichen Gewinnung der Tracking-Daten entfallen.

Die gewonnenen Tracking-Daten können je nach eingesetztem Verfahren mit Fehlern behaftet sein. So können sich dynamische Offsetprobleme bei einer nicht genauen Kalibrierung des Tracking-Systems ergeben. Im Bild macht sich ein solcher Fehler durch Schwimmen der realen Gegenstände auf einem virtuellen Fußboden beispielsweise bei Kamerabewegungen bemerkbar. Für die Tongestaltung ist ein solcher Fehler jedoch eher vernachlässigbar, da sich eine so minimale Abweichung zwischen Bild und Ton noch nicht störend bemerkbar machen dürfte. Weiterhin kann es sein, daß Tracking-Fehler dazu führen, daß Werte mancher Kameraparameter mit hochfrequenten Störungen belegt waren. Diese machen sich bei der ungefilterten Verwendung der Daten durch ein Zittern der Schallquelle bemerkbar. Dadurch können Vibrato- und Tremolo-ähnliche Klangverfärbungen entstehen. Eine mit solchen Fehlern behaftete Sequenz von Tracking-Daten sollte vor ihrer Verwendung im Rahmen der Bereitstellung der Daten tiefpaßgefiltert werden.

Der Einrichtung 10 nachgeschaltet befindet sich eine Einrichtung 12 zum Transformieren der Aufnahmeposition der Schallquelle in das Kamerakoordinatensystem. Der Ursprung des Kamerakoordinatensystems ist bezüglich einer Kameraöffnung definiert. Die Einrichtung 12 zum Transformieren ist wirksam, um eine Transformieren der Aufnahmeposition der Schallquelle in ein Kamerakoordinatensystem zu schaffen, dessen Ursprung bezüglich einer Kameraöffnung definiert ist, um eine Aufnahmeposition der Schallquelle in dem Kamerakoordinatensystem zu erhalten.

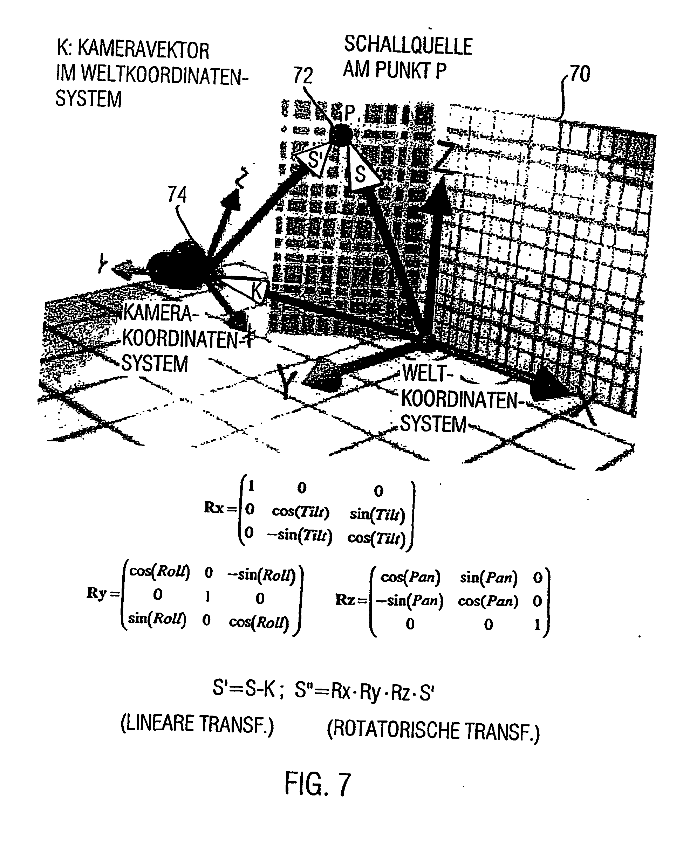

Fig. 7 zeigt zur Veranschaulichung der Transformation, die durch die Einrichtung 12 bewirkt wird, eine Gegenüberstellung des Weltkoordinatensystems und des Kamerakoordinatensystems. Bei dem in Fig. 7 gezeigten Beispiel ist das Weltkoordinatensystem als Stelle einer Blue Screen 70 im virtuellen Studio definiert. Der Ursprung des Weltkoordinatensystems ist irgend ein beliebiger, aber fester Punkt im virtuellen Studio, und in Fig. 7 die linke untere Ecke der Blue Screen 70. Eine Schallquelle am Punkt P ist in Fig. 7 mit 72 bezeichnet. Die Kameraposition ist in Fig. 7 mit einem Vektor K bezeichnet, der auf einen Kameraursprung 74 zeigt. Bei dem in Fig. 7 gezeigten Szenario sind sowohl das Weltkoordinatensystem als auch das Kamerakoordinatensystem als rechtwinklige Koordinatensysteme dargestellt, bei denen ein Vektor durch eine x-Komponente, eine y-Komponente und eine z-Komponente gegeben ist. Alternativ könnte jedes Koordinatensystem auch als ein zylindrisches Koordinatensystem oder ein Kugelkoordinatensystem dargestellt sein. Aufgrund der Einfachheit der Darstellung wird nachfolgend jedoch von einem kartesischen Koordinatensystem für sowohl das Kamerakoordinatensystem als auch das Weltkoordinatensystem ausgegangen. Die Einrichtung 10 ist wirksam, um die Aufnahmeposition der Schallquelle 72 im Weltkoordinatensystem, also den Vektor S bereitzustellen. Die Einrichtung 10 zum Bereitstellen ist ferner wirksam, um die Kameraposition im Weltkoordinatensystem bereitzustellen, also den Vektor K in Fig. 7. Auf den Öffnungswinkel der Kamera wird später eingegangen.

Bezüglich des Kamerakoordinatensystems wird als Ursprung des Kamerakoordinatensystems vorzugsweise der sogenannten Nodal Point der Kamera, der dem Loch beim Modell der Lochkamera entspricht, oder allgemein dem Schnittpunkt aller Strahlen entspricht, die in einem Öffnungswinkel der Kamera in das Objektiv der Kamera eintreten und dann auf einem Bildwandler abgebildet werden, als Kamerakoordinatensystemursprung 74 festgelegt. Es sei darauf hingewiesen, daß jedoch auch jeder andere Punkt im Kamerakoordinatensystem, der um eine bekannte Distanz vom Ursprung 74 beabstandet ist, als Kamerakoordinatensystem-Bezugspunkt verwendet werden könnte, wenn dann noch die Transformation von diesem Punkt zum Nodal Point der Kamera berücksichtigt wird.

Als Ausgangsbasis stehen im Weltkoordinatensystem somit der Vektor zur Kamera K (zum Nodal Point der Kamera) sowie ein Vektor zur Schallquelle S am Punkt P zur Verfügung. Im ersten Schritt wird durch die Einrichtung 12 der Schallquellenvektor in das Kamerakoordinatensystem transformiert, wie es unter dem Auszug "lineare Transformation" in Fig. 7 dargestellt ist. Hierbei ist S' der Vektor der Schallquelle im Kamerakoordinatensystem. S ist der Vektor der Schallquelle im Weltkoordinatensystem und K ist der Vektor der Kamera im Weltkoordinatensystem.

An dieser Stelle sei darauf hingewiesen, daß die Kamera nicht nur translatorisch im Weltkoordinatensystem bewegt werden kann, sondern auch in allen drei Richtungen x, y und z bezüglich des Kamerakoordinatensystem-Ursprungs 74 "verdreht" werden kann. Eine Kamera besitzt somit drei Freiheitsgrade der Rotation. Diese drei Winkel der Kameraausrichtung im Raum werden als Pan, Tilt und Roll in Fachkreisen bezeichnet. Mit Hilfe der in Fig. 7 unterhalb der Figur dargestellten Rotationsmatrizen Rx, Ry und Rz wird diese Ausrichtung auf den Schallquellenvektor S' im Kamerakoordinatensystem übertragen. Für die rotatorische Transformation wird daher die rechts in Fig. 7 dargestellte Gleichung verwendet, um aus dem Vektor der Schallquelle S' einen Vektor der Schallquelle S" im Kamerakoordinatensystem zu machen, in dem nun die rotatorische Ausrichtung der Kamera um x, y und z berücksichtigt ist.

Der Vektor S" ist daher der Vektor der Schallquelle im Kamerakoordinatensystem unter Berücksichtigung der Kameraausrichtung.

Der Einrichtung 12 nachgeschaltet ist eine Einrichtung 14 zum Berechnen der Wiedergabeposition der Schallquelle bezüglich des Projektionsbezugspunkts, wobei die Einrichtung 14 zum Berechnen ausgebildet ist, um den Projektionspunkt und die Kameraöffnung als gemeinsamen Ausgangspunkt zu verwenden. Im einzelnen ist die Einrichtung zum Berechnen der Wiedergabeposition ausgebildet, wie es in Fig. 2 schematisch dargestellt ist.

Nachdem die Wiedergabeposition durch die Einrichtung 14 berechnet worden ist, wird in einer Einrichtung 16 die Wiedergabeposition der Schallquelle bezogen auf die Wiedergabefläche ausgegeben.

Die in Fig. 2 gezeigte Vorrichtung ist somit wirksam, um Wiedergabepositionen von Schallquellen in einer Wiedergabe-umgebung, also z. B. bezüglich einer Kinoleinwand zu ermitteln. Solche Wiedergabepositionen können von einem Wellenfeldsynthesemodul oder Klangfeldsynthesemodul verwendet werden, um eine nicht nur visuelle dreidimensionale sondern auch akustisch dreidimensionale Wiedergabe einer audiovisuellen Szene z. B. in einem Kino zu erreichen. Im einzelnen läßt sich bei der Kinomischung mit Klangfeldsynthese ein beeindruckendes Klangfeld schaffen. Dies kann unter anderem durch eine exakte Positionierung von virtuellen Schallquellen zum Bild geschehen. In subjektiven Kameraeinstellungen kann durch eine mit dem Bild übereinstimmende akustische Perspektive ein starkes Eintauchen in eine Szene ermöglicht werden. Die Mischung einer solchen Szene bezüglich der Positionierung der Lautsprecher wird durch das erfindungsgemäße Konzept vereinfacht und durch die anhand von Fig. 2 dargestellten einzelnen Algorithmen automatisierbar. Dem Mischtonmeister wird somit die Realisierung des Konzepts des Hörens mit den Ohren der Kamera "erleichtert", da eine automatische Positionierung von Schallquellen abhängig von einer realen Kameraeinstellung und abhängig von der Position der Schallquelle im realen Setting ermöglicht wird. Hierzu wird auf der Basis eines Trackings der Kameraparameter sowie bei bewegten Akteuren auf der Basis des Trackings dieser Personen gearbeitet.

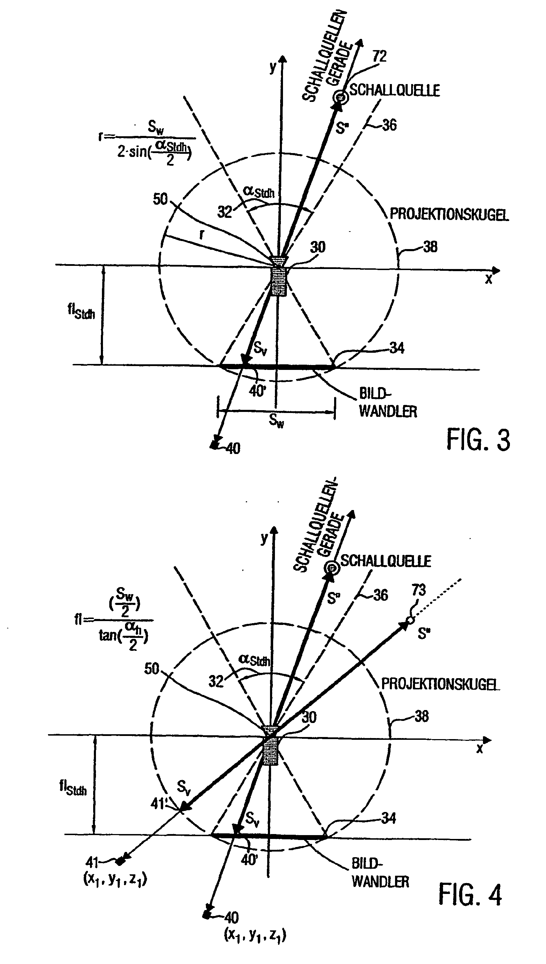

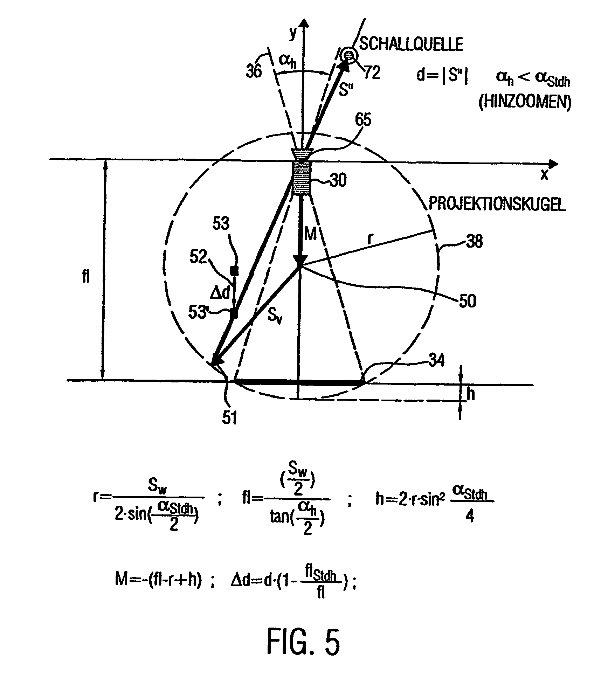

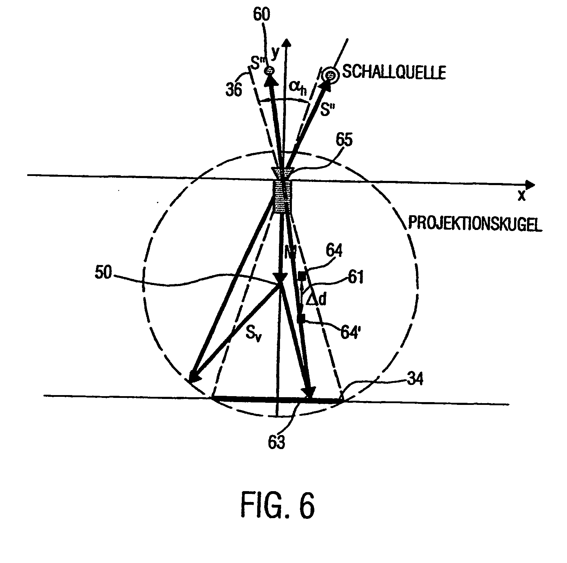

Nachfolgend wird anhand der Fig. 3 und 4 die Situation betrachtet, bei der der Öffnungswinkel der Kamera einem vorbestimmten Standardöffnungswinkel entspricht. Die Fig. 5 und 6 beschreiben dagegen den Fall, bei dem der tatsächliche Öffnungswinkel der Kamera während der Aufnahme einer Szene von dem vorbestimmten Standardöffnungswinkel abweicht.

Fig. 3 zeigt eine Draufsicht auf ein Szenario, das oberhalb der x-Achse, also bei positiven y-Werten das reale Aufnahmesetting darstellt, und das unterhalb der x-Achse, also zu negativen y-Werten die Wiedergabe der Szene des realen Settings (mit positiven y-Koordinaten) darstellt. Es sei darauf hingewiesen, daß es sich bei dem in Fig. 3 gezeigten Szenario um ein dreidimensionales Szenario in der Draufsicht handelt, wobei aus Gründen der Einfachheit für die Draufsicht eine z-Koordinate von z = 0 angenommen wird. Die z-Achse erstreckt sich daher senkrecht zur Zeichenebene in Fig. 3.

Die Schallquelle 72 befindet sich an einer bestimmten Position im Aufnahmesetting, die durch das Weltkoordinatensystem ursprünglich gegeben ist. Das in Fig. 3 gezeigte Koordinatensystem x, y, z ist jedoch nunmehr das Kamerakoordinatensystem. In Fig. 3 ist ferner eine kombinierte Kamera/Projektoreinrichtung 30 eingezeichnet, die einerseits, also bei positiven y-Koordinaten das Kameraobjektiv symbolisieren soll, und die andererseits, zu negativen y-Koordinaten das Projektorobjektiv darstellen soll. Der Ursprung des gemeinsamen Kamerakoordinatensystems-Wiedergabekoordinatensystems ist mit 50 bezeichnet. Der Vektor vom Ursprung 50 zur Schallquelle 72 wird als Schallquellenvektor bezeichnet.

Das Kameraobjektiv hat bei dem in Fig. 3 gezeigten Fall einen Standard-Öffnungswinkel in horizontaler Richtung der mit $\alpha_{stdh}$ bzw. mit dem Bezugszeichen 32 bezeichnet ist. Der Öffnungswinkel 32 stellt den "Sichtbereich" der Kamera dar, dahingehend, daß alles, was innerhalb des horizontalen Öffnungswinkels ist, von der Kamera gesehen wird, also auf einem Bildwandler 34 abgebildet wird, während alles, was außerhalb des horizontalen Öffnungswinkels 32 ist, also außerhalb der gestrichelten Linien 36, nicht auf dem Bildwandler 34 abgebildet wird.

Es sei darauf hingewiesen, daß der Bildwandler 34 entweder als z. B. 35 mm-Film einer Kamera aufgefaßt werden kann, jedoch genauso auch als Leinwand in einem Kino mit einer Breitenausdehnung $s_w$ von beispielsweise 10 m aufgefaßt werden kann. Um die Kamera/Projektor-Einrichtung 30 ist aus Illustrationsgründen in Fig. 3 ferner eine Projektionskugel 38 eingezeichnet, deren Radius sich ergibt, wie es in Fig. 3 links oben dargestellt ist. Da bei dem in Fig. 3 gezeigten Ausführungsbeispiel der Öffnungswinkel der Kamera gleich dem Standard-Öffnungswinkel beispielsweise des menschlichen Auges ist, der bei 27 bis 28 Grad liegt, ist der Mittelpunkt der Projektionskugel 38 identisch zu dem Ursprung des Kamerakoordinatensystems. Der Radius der Projektionskugel 38 berechnet sich, wie es ausgeführt worden ist, durch die in Fig. 3 links oben dargestellte Gleichung. Anschaulich gesprochen wird der Radius so gewählt, daß die horizontale Maximalabmessung einer Leinwand in einem bestimmten Kino, die mit $s_w$ bezeichnet ist, in die Kugel "hineinpaßt", so daß aufgrund der Sphärizität der Kugel von der Leinwand zu positiven und negativen z-Koordinaten nur die Ecken derselben aus der Kugel nach hinten "vorstehen".

Die Einrichtung 14 zum Berechnen der Wiedergabeposition ist nunmehr wirksam, um zunächst eine Position 40' auf der Leinwand 34 zu ermitteln, auf deren Basis dann die Wiedergabeposition 40 für die Schallquelle 72 errechnet wird. Hierzu wird eine Schallquellengerade durch den Punkt 72 und den Nodal Point, der bei dem in Fig. 3 gezeigten Zoom-Setting mit dem Ursprung 50 der Projektionskugel 38 zusammenfällt, konstruiert. Es sei darauf hingewiesen, daß die Schallquellengerade nicht nur im zweidimensionalen Raum, sondern auch im dreidimensionalen Raum liegen kann, obgleich dies aufgrund der Draufsicht in Fig. 3 nicht unmittelbar aus der Figur ersichtlich ist.

In dem Fall, in dem der Standardöffnungswinkel gleich dem horizontalen Öffnungswinkel der Kamera für die Szene ist, ist erfindungsgemäß die Position 40 der Schallquelle durch die Schallquellengerade durch den Schnittpunkt 40' der Schallquellengerade und der Leinwand 34 gegeben. Der Schnittpunkt 40' der Schallquellengerade mit der Leinwand wird berechnet, indem eine Gerade durch den Ort der Schallquelle sowie den Ursprung 50 des Kamerakoordinatensystems gelegt wird, da dieser dem Nodal Point, dem Schnittpunkt aller Strahlen beim Modell einer Lochkamera, entspricht.

$$\mathbf{R_S} = \mathbf{R_{1S}} + \lambda \cdot \mathbf{S''}$$

wobei

$R_{1S}$      Ortsvektor eines Punkts der Geraden

$\lambda$      reeller Parameter

$R_s$      Ortsvektor des laufenden Punkts auf der Geraden

$$\mathbf{R_{1S}} = \begin{pmatrix} 0 \\ 0 \\ 0 \end{pmatrix}$$

Abhängig von der Brennweiteneinstellung der Kamera kann der Abstand zwischen Nodal Point und Bildwandlerebene - fl - nach folgender Gleichung berechnet werden.

$$fl = \frac{\left(\dfrac{s_w}{2}\right)}{\tan\left(\dfrac{\alpha_h}{2}\right)}$$

wobei

fl     Focal Length - Abstand des Bildwandlers von Nodal Point
(in dieser Berechnung entspricht der Bildwandler der Normalleinwand)

$s_w$     Leinwandbreite

$\alpha_h$     horizontaler Öffnungswinkel der Kamera

Damit läßt sich die Gleichung für die Bildwandlerebene 34 aufstellen.

$$\mathbf{N_L} \cdot (\mathbf{R_L} - \mathbf{R_{1L}}) = 0$$

wobei

$\mathbf{N_L}$     Normalenvektor der Bildwandlerebene

$\mathbf{R_L}$     Ortsvektor des laufenden Punkts auf der Ebene

$\mathbf{R_{1L}}$     Ortsvektor der Bildwandlerebene

$$\mathbf{N}_L = \begin{pmatrix} 0 \\ 1 \\ 0 \end{pmatrix} \qquad \mathbf{R}_{1L} = \begin{pmatrix} 0 \\ -fl \\ 0 \end{pmatrix}$$

Allgemein lässt sich der Schnittpunkt einer Geraden mit einer Ebene folgendermaßen berechnen.

$$\mathbf{S}_v = \mathbf{R}_{1S} + \left( \frac{\mathbf{R}_L \cdot (\mathbf{R}_{1L} - \mathbf{R}_{1S})}{\mathbf{N}_L \cdot \mathbf{S}''} \right) \cdot \mathbf{S}''$$

mit

$$\mathbf{R}_{1S} = \begin{pmatrix} 0 \\ 0 \\ 0 \end{pmatrix} \qquad \mathbf{R}_{1L} = \begin{pmatrix} 0 \\ -fl \\ 0 \end{pmatrix} \qquad \mathbf{N}_L = \begin{pmatrix} 0 \\ 1 \\ 0 \end{pmatrix}$$

$$S_v = R_{1S} + \left( \frac{N_L \cdot R_{1L}}{N_L \cdot S''} \right) \cdot S''$$

$$S_v = \frac{-fl}{y_{S''}} \cdot S''$$

wobei

$S_v$    Schnittpunkt (40) der Schallquellengeraden mit der Bildwandlerebene bzw. mit der Projektionskugel (Position der virtuellen Schallquelle ohne Tiefe)

$y_{S''}$    Koordinate von S''

Auf dem Schnittpunkt 40' der Geraden mit der Bildwandlerebene basiert die Position der Schallquelle bezüglich des Bildwandlers. Für den hier betrachteten Fall ergibt sich der Schnittpunkt 40' nach der vorstehenden Gleichung.

Im Hinblick auf die vorstehende Berechnung sei noch hinzugefügt, daß der Abstand fl zwischen dem Ursprung des Kamerakoordinatensystems und der Bildwandlerebene 34 ebenfalls durch die Leinwandbreite einerseits und den Standardöffnungswinkel andererseits gegeben ist. Die entsprechende Definitionsgleichung findet sich links oben in Fig. 4. Wird hier für den Winkel $\alpha$ der Standardöffnungswinkel in horizontaler Richtung 32, also $\alpha_{stdh}$, eingesetzt, so ergibt sich die Größe $fl_{stdh}$ für den Fall der 1:1-Abbildung, also wenn der Öffnungswinkel der Kamera gleich dem Öffnungswinkel des menschlichen Sehsystems ist.

Je nach Ausführungsbeispiel kann der Schnittpunkt 40' bereits als Wiedergabeposition genommen werden. In diesem Fall wird die Länge des Schallquellenvektors, also der Abstand der Schallquelle von der Kamera nicht berücksichtigt.

Um jedoch auch diese Größe zu berücksichtigen, wird es bevorzugt, auf der Basis des Schnittpunkts 40' die Wiedergabeposition 40 zu berechnen. Hierzu wird der Vektor Sv derart skaliert, dass er dieselbe Länge wie der Vektor S'' hat. Dies kann dadurch geschehen, dass die Länge von S'' und die Länge von Sv berechnet werden und dann die xyz-Koordinaten des Vektors Sv mit dem Verhältnis der Länge des Vektors S'' zu der Länge des Vektors Sv multipliziert werden. Dadurch wird der in Fig. 3 mit 40 bezeichnete Punkt erhalten.

Alternativ kann die Skalierung nichtlinear gemacht werden, so dass der Skalierungsfaktor noch je nach seiner Größe gewichtet wird, um z. B. größere Abstände zwischen 40' und 40 zu verkleinern und/oder unter Verwendung einer Schwelle den Abstand zwischen 40' und 40 auf einen Maximalwert zu begrenzen.

Unabhängig von der einzelnen Skalierung stellt der Schnittpunkt 40' sicher, dass die Richtung der zu positionierenden Schallquelle bereits festliegt, also die Schallquellengerade durch den Ursprung und den Punkt 40', auf der dann je nach Ausführungsbeispiel letztendlich die Wiedergabeposition festgelegt wird.

Wie es in Verbindung mit Fig. 3 ausgeführt worden ist, ist hier der Fall dargestellt, bei dem die Schallquelle 72 innerhalb des Öffnungswinkels 32 der Kamera ist. Im Hinblick auf die visuelle Darstellung ist die Sachlage insofern einfach, da Dinge innerhalb des Öffnungswinkels der Kamera auf der Leinwand dargestellt werden, also sichtbar sind, während Dinge außerhalb des Öffnungswinkels der Kamera nicht auf der Leinwand dargestellt werden, also unsichtbar sind. Nicht so einfach ist es jedoch bei der akustischen Darstellung.

Es ist normalerweise immer so, daß in einem realen Setting Schallquellen existieren, die zwar visuell unsichtbar sind, jedoch dennoch akustisch hörbar sind. Ein einfaches Beispiel hierfür besteht darin, daß ein Dialog zwischen zwei Personen existiert, wobei die Kamera auf eine der beiden Personen gerichtet ist, nicht jedoch auf die andere Person. In diesem Fall ist zwar die eine Person, also die eine Schallquelle in dem Setting sichtbar, während die andere Person, also die andere Schallquelle in dem Setting, nicht sichtbar ist.

Diesem Fall wird die in Fig. 4 illustrativ dargestellte erfindungsgemäße Berechnung gerecht, indem der Schnittpunkt der Schallquellengeraden durch die Schallquelle 73 außerhalb des Sichtbereichs 36 der Kamera durch den Nodal Point der Kamera mit der Projektionskugel 38 als Position 41 mit den Koordinaten $x_2, y_2, z_2$ berechnet wird. Die detaillierte Berechnung des Schnittpunkts 41' einer Geraden mit einer Kugel ist für Fachleute bekannt und wird für den in Fig. 4 dargestellten Fall nicht extra dargelegt, kann jedoch anhand dem in Fig. 5 gezeigten Fall ohne weiteres rekonstruiert werden, wenn der Parameter M in Fig. 5 zu 0 gesetzt wird, wie später noch dargelegt wird.

Im Hinblick auf die Feststellung, ob eine Schallquellengerade einen Schnittpunkt mit dem Bildwandler hat oder nicht, sei darauf hingewiesen, daß es hierfür effiziente Algorithmen gibt. Eine einfache Herangehensweise wäre jedoch auch, davon auszugehen, daß es einen Schnittpunkt mit dem Bildwandler gibt, und diesen Schnittpunkt auszurechnen, um festzustellen, ob am Ende ein gültiges Ergebnis herauskommt oder nicht. Eine andere Herangehensweise würde darin bestehen, zunächst davon auszugehen, daß es keinen Schnittpunkt gibt, also einen Schnittpunkt der Geraden mit der Kugel zu berechnen, um dann festzustellen, ob die y-Koordinate des erhaltenen Ergebnisses darauf hindeutet, daß es nur einen Schnittpunkt der Schallquellengerade mit der Kugel gibt, oder daß es einen Schnittpunkt 41' der Schallquellengerade mit der Kugel und der Leinwand 34 gibt, wobei in diesem Fall der Schnittpunkt der Schallquellengerade mit der Leinwand Vorrang hat vor dem Schnittpunkt der Schallquellengerade mit der "hinter der Leinwand" befindlichen Projektionskugel.

Da somit die Größe des Bildwandlers bekannt ist, kann auch ermittelt werden, ob die Schallquelle auf die Leinwand abgebildet wird. In diesem Fall können die entsprechenden Koordinaten an das Wiedergabesystem ausgegeben werden. Im anderen Fall werden nicht die auf der Basis der Leinwand berechneten Koordinaten 40 bzw. 40', sondern die auf der Basis der Kugel berechneten Koordinaten 41 bzw. 41' an das Wiedergabesystem ausgegeben, damit ein Wellenfeldsynthesemodul entsprechende Phasen- und Amplituden-eingestellte Signale an eine Vielzahl von Lautsprechern sendet, um eine virtuelle Schallquelle an der berechneten Position 40 oder 41 zu simulieren, d. h. nachzubilden.

Es sei darauf hingewiesen, dass bezüglich der Bestimmung der Position 41' auf der Basis des Schnittpunkts 41 genauso wie in Fig. 3 beschrieben vorgegangen werden kann.

An dieser Stelle sei darauf hingewiesen, daß sich die Fig. 3 und 4 darauf beziehen, daß eine 1:1-Projektion eines Bildes auf eine Leinwand vorgenommen worden ist. In diesem Fall ist der Öffnungswinkel des Auges gleich dem Öffnungswinkel der Kamera, also dem vordefinierten Standard-Öffnungswinkel $\alpha_{stdh}$, so daß die abgebildeten Winkel- und Größenverhältnisse exakt mit denen der Realität übereinstimmen, d. h. mit denen der Realität, wie sie das menschliche Auge wahrnimmt. Dies bedeutet, daß in diesem Fall auch für Schallquellen, die außerhalb der Leinwand liegen, die Winkel bezogen auf den Viewpoint 1:1 abgebildet werden, wie es anhand von Fig. 4 erläutert worden ist.

Werden bei einer Kamera nun jedoch verschiedene Öffnungswinkel, d. h. verschiedene Brennweiten oder Zoom-Einstellungen verwendet, so werden die realen Verhältnisse verzerrt dargestellt. Objekte auf der Leinwand werden größer oder kleiner als in der Realität. Darüber hinaus verändert sich der sichtbare Bildausschnitt. Um ein für die gesamte Umgebung des Zuschauers kontinuierliches Klangbild zu erhalten, muß die dreidimensionale Szene bezogen auf den Winkel im "Off", d. h. außerhalb des sichtbaren Bereichs, gestreckt oder gestaucht werden. Zu diesem Zweck erfolgt die Berechnung der Wiedergabewinkel für die Schallquellen, die nicht auf der Leinwand dargestellt werden, durch eine Projektion auf eine Kugel, wie es bereits anhand von Fig. 4 für den Fall der vordefinierten Standard-Zoomeinstellung dargelegt worden ist.

Aufgrund der Zoom-Einstellung der Kamera entfernt sich nun jedoch der Kameraöffnungspunkt zur Berechnung der Schallquellengerade vom Projektor um die Strecke, die durch einen Vektor M in Fig. 5 dargestellt ist. Der Radius der Projektionskugel in Fig. 5 (und auch in Fig. 6) ist jedoch nach wie vor durch den Standard-Öffnungswinkel und die Leinwand definiert. Die Verschiebung des Kameraöffnungspunkts bezüglich des Projektoröffnungspunkts um den Vektor M in Fig. 5 ist dabei gleichbedeutend mit einer Veränderung des Werts fl, der bei dem in Fig. 5 gezeigten Beispiel im Vergleich zu dem in Fig. 3 oder Fig. 4 gezeigten Beispiel größer wird, also größer als der Wert für den Standardöffnungswinkel $fl_{stdh}$.

An dieser Stelle sei darauf hingewiesen, daß die spezielle Betrachtung einer von der Standard-Einstellung abweichenden Zoom-Einstellung der Kamera vorgenommen werden muß, da das menschliche Auge, das letztendlich das auf das Leinwand projizierte Bild betrachten soll und zusammen mit dem menschlichen Ohr einen realistischen Gesamteindruck haben soll, keine Zoom-Funktion hat. Was eine Kamera einfach dadurch erreicht, daß eine Zoom-Einstellung eines Objekts verändert wird, kann ein Mensch nur durch Hingehen zu einem Objekt oder Weggehen von einem Objekt erreichen. Geht ein Mensch zu einem Objekt hin, so erscheint es größer. Geht ein Mensch von einem Objekt weg, so erscheint es kleiner. In anderen Worten ausgedrückt muß eine z. B. sichtbare Schallquelle, wie z. B. der Mund einer sprechenden Person, die durch ein Zoomen einer Kamera herangeholt wird, auch zu dem Betrachter im Kino näher "herkommen".

Dies ist aber nicht der Fall, da der Betrachter im Kino statisch sitzt, und somit nicht näher an die Leinwand bzw. an die vorher berechnete Schallposition hingehen kann. Es würde auch keinen Sinn machen, da ja das Bild auf der Kamera ohnehin größer wird. Erfindungsgemäß wird daher dafür gesorgt, daß im Falle einer abweichenden Standard-Zoom-Einstellung eine Schallquelle gewissermaßen synchron zum Hineinzoomen oder Herauszoomen einer Kamera zum Betrachter hin bewegt wird oder vom Betrachter weg bewegt wird.

Es sei darauf hingewiesen, daß es nicht nur die Lautstärke ist, die sich durch Entfernung von einer Schallquelle verändert, sondern auch die Klangfarbe des Schalls. Ist ein Betrachter sehr weit von einer Schallquelle entfernt, so wird seine Wahrnehmung der Schallquelle durch sehr viel Nachhalleffekte die aufgrund der umgebenden Raumakustik bedingt sind, geprägt sein, während im anderen Fall, in dem sich ein Benutzer sehr nah an einer Schallquelle befindet, diese Schallquelle relativ trocken, also ohne wesentliche Beeinflussung durch akustische Raumeffekte wahrgenommen werden wird. Daher genügt es nicht nur, Schallquellen, die näher sind, lauter oder leiser zu machen, sondern es ist auch für ein realistisches dreidimensionales Gesamtbild wünschenswert, für näher befindlichere Schallquellen Raumakustikeffekte eher herauszunehmen, während für weiter weg befindliche Schallquellen Raumakustikeffekte, also Halleffekte eher verstärkt werden sollten.

Die Projektionskugel 38 wird so gewählt, daß ihr Mittelpunkt M beim Standardwinkel (Winkel der 1:1 Projektion) im Nodal Point der Kamera liegt, und das die Mittelachse des Bildwandlers komplett in der Kugel liegt.

Die Projektionskugel läßt sich durch folgende Gleichung beschreiben.

$$(\mathbf{R}_K - \mathbf{M})^2 - r^2 = 0$$

mit

$$\mathbf{M} = \begin{pmatrix} 0 \\ -(fl - r + h) \\ 0 \end{pmatrix} \qquad r = \frac{s_w}{2\sin\left(\frac{\alpha_{stdh}}{2}\right)} \qquad h = 2 \cdot r \cdot \left(\sin\left(\frac{\alpha_{stdh}}{4}\right)\right)^2$$

Der Schnittpunkt einer Kugel mit einer Gerade wird bestimmt, indem ein zur Geraden zeigender Vektor mit einer Konstanten λ multipliziert wird. Für den hier beschriebenen Fall läßt sich die Gleichung für λ vereinfachen. Die Gleichung liefert zwei Ergebnisse. Für diese Anwendung muß der Wert ausgewählt werden, welcher im der Schallquelle gegenüberliegenden Quadranten des Kamerakoordinatensystems liegt.

$$\lambda_{1/2} = \frac{1}{(\mathbf{S}'')^2} \cdot \left( (\mathbf{S}'')^T \cdot (\mathbf{M} - \mathbf{R}_{1S}) \pm \sqrt{\left((\mathbf{S}'')^T \cdot (\mathbf{M} - \mathbf{R}_{1S})\right)^2 - (\mathbf{S}'')^2 \cdot (\mathbf{R}_{1S} - \mathbf{S}'')^2 - r^2} \right)$$

mit

$$\mathbf{R}_{1S} = \begin{pmatrix} 0 \\ 0 \\ 0 \end{pmatrix}$$

$$\lambda_{1/2} = \frac{1}{(\mathbf{S}'')^2} \cdot \left( (\mathbf{S}'')^T \cdot \mathbf{M} \pm \sqrt{\left((\mathbf{S}'')^T \cdot \mathbf{M}\right)^2 - (\mathbf{S}'')^2 \cdot \left((\mathbf{S}'')^2 - r^2\right)} \right)$$

$$\mathbf{S}_v = (\lambda_{1/2} \cdot \mathbf{S}'') - \mathbf{M}$$

wobei

M      Mittelpunktvektor der Projektionskugel

r      Radius der Projektionskugel

h      Höhe

$\alpha_{stdh}$      horizontaler Standardöffnungswinkel

$R_K$      Ortsvektor eines laufenden Punkts auf der Kugel

Der Vektor zum Schnittpunkt zwischen Schallquellengeraden und der Kugel läßt sich dann nach der vorstehenden Gleichung für $S_v$ berechnen. Bei verschiedenen Brennweiteneinstellungen der Kamera wird die Kugel analog zur Bildwandlerebene verschoben. Bezugspunkt für die Berechnung des neuen Schallquellenvektors für die Wiedergabe ist jedoch immer der Mittelpunkt der Kugel. Daher wird der Mittelpunktsvektor subtrahiert.

Durch die vorstehende Berechnung wird somit der Vektor $S_v$ berechnet, und zwar bei dem in Fig. 5 gezeigten Fall als Schnittpunkt 51 mit der Projektionskugel. Damit ergibt sich ein Vektor von dem Ursprung der Kamera 30 zum Schnittpunkt 51 der Schallquellengerade durch die Schallquelle und den Ursprung der Kamera als Addition der Vektoren M und $S_v$. Wird der Fall M gleich 0 gewählt, wird in der in Fig. 5 dargestellten und vorstehend beschriebenen Berechnung der Wert M = 0 gesetzt, um den Fall von Fig. 4 zu erreichen, also den Fall, bei dem sich die Schallquelle außerhalb des Sichtbereichs 36 der Kamera befindet und auf die Projektionskugel 38 außerhalb der Leinwand, also bei der Position 41, abbildet.

Die bisherige Berechnung der Abbildung der Schallquelle 72 in Fig. 5 auf die Projektionskugel 38 gibt nunmehr zwar den Winkel der Schallquelle 72 bezogen auf den Referenzpunkt, nämlich den Mittelpunkt 50 an. Noch nicht berücksichtigt ist jedoch die Länge des Schallquellenvektors S'' und der Effekt, daß die Schallquelle näher an den Betrachter heranrückt bzw. weiter von dem Betrachter weg rückt, je nach dem, ob in eine Szene hineingezoomt worden ist, oder ob aus einer Szene herausgezoomt worden ist.

Nachdem der Winkel der Schallquelle bezogen auf den Referenzpunkt nunmehr bestimmt worden ist als ein Hilfspunkt 51, kann noch eine Skalierung durchgeführt werden ,um den Punkt 53' zu erhalten, von dem ausgehend dann gemäß einem Ausführungsbeispiel der Erfindung noch die Schallquellenentfernung dem gesehenen Bildeindruck nachempfunden wird.

Der Berechnung der Differenz 52 in Fig. 5 liegt dabei die Überlegung zugrunde, daß das optische System des Menschen keine veränderliche Brennweite besitzt. Dies hat zur Folge, daß eine vergrößerte Darstellung von Objekten auf einer Leinwand dem menschlichen Empfinden eine Entfernungsänderung, ein Näherkommen und damit eine Änderung des Betrachtungsstandorts suggeriert. Das heißt, daß mit Verkleinerung des Öffnungswinkels der Kamera ein aufgenommenes Objekt vergrößert wird. Damit soll auch die korrespondierende Schallquelle näher an einen Betrachter heranrücken.

Um die neue Entfernung zu berechnen, wird erfindungsgemäß vom Standardwinkel ausgegangen. Ein Objekt in einer gegebenen Entfernung mit der Größe 1 wird im Falle des Standardwinkels in seiner Abbildungsgröße auf der Leinwand bestimmt. Nun wird die Abbildungsgröße beim eingestellten Zoom betrachtet, und die "virtuelle Kamera" 30 in Fig. 5 wird verschoben, bis die Abbildungsgröße wieder der beim Standardwinkel entspricht. Um diese Entfernungsänderung wird die Schallquelle verschoben, woraus sich die neue Entfernung ergibt. Für Quellen, die sich hinter der Kamera befinden, ergibt sich so das Verhalten, daß sie sich bei einem Heranzoomen von der Kamera entfernen.

Dieser Effekt wird durch die Differenz $\Delta d$ 52 in Fig. 5 berücksichtigt, die derart berechnet wird, wie es durch die Gleichung rechts unten in Fig. 5 dargestellt ist. Mathematisch beschreibt also folgende Gleichung diese Verschiebung um die Differenz $\Delta d$. Diese muß dann auf den Wiedergabevektor (also in Fig. 5 auf den Vektor, der vom Referenzpunkt 65 zum Punkt 53' gerichtet ist) angewendet werden, um den Punkt 53 zu erhalten:

$$\Delta d = d \cdot \left( 1 - \frac{fl_{stdh}}{fl} \right)$$

wobei

$\Delta d$      Entfernungsänderung für die virtuelle Schallquelle

d      Entfernung der realen Schallquelle (Länge von S'')

$fl_{stdh}$    Focal Length beim Standardöffnungswinkel

$fl$    Focal Length beim aktuellen Öffnungswinkel der Kamera

Fig. 6 zeigt den zu Fig. 5 ähnlichen Fall, nun jedoch für eine Schallquelle 60, die sich trotz des Hineinzoomens in eine Szene dennoch innerhalb des Gesichtsfelds, das durch die gestrichelten Linien 36 definiert ist, der Kamera befindet. Hier wird in Analogie zu Fig. 3 der Schnittpunkt 63 der Schallquellengerade, die durch S" und den Öffnungswinkel der Kamera definiert ist, mit der Leinwand 34 berechnet, um zunächst eine Winkelabbildung zu erreichen. Die Winkelabbildung liefert den Punkt 63 auf der Leinwand 34.

Dann erfolgt bei einem Ausführungsbeispiel eine Skalierung auf der Basis der Längen der Vektoren, wie es anhand von Fig. 3 beschrieben worden ist. Durch diese Skalierung wird der Punkt 64' erhalten. Dieser Punkt 64' wird dann, um die letztendliche Wiedergabeposition 64 der Schallquelle zu erhalten, noch um die Differenz Δd 61 in Richtung zu der x-Achse verschoben.

An dieser Stelle sei darauf hingewiesen, dass die Verschiebung um Δd 52 oder 61 in den Fig. 5 und 6 alternativ implementiert werden kann. So kann bezugnehmend auf Fig. 6 die Verschiebung Δd 61 auch auf die reale Schallquelle im Kamerakoordinatensystem, also den Punkt 60 angewendet werden. Hierauf wird die neue Länge des sich ergebenden Vektors S" berechnet. Auf der Basis dieser Länge wird dann der Vektor Sv skaliert (der Vektor Sv erhält beispielsweise genau die Länge von S"), so dass sich ein Punkt für die Wiedergabeposition ergibt, der von dem Punkt 64 in Fig. 6 abweicht. Je nach Ausführungsbeispiel kann auch für die Schallquelle außerhalb des "Sichtfeldes", also für den Fall in Fig. 5, die anhand von Fig. 5 gezeigte Verschiebung um Δd implementiert werden und für den Fall von Fig. 6, also für den Fall der Schallquelle im Sichtfeld, die oben beschriebene abweichende Berechnung bzw. Anwendung der Verschiebung auf S" verwendet werden. Dieses Prozedere kann ferner auch für die beiden Fälle in Fig. 5 und Fig. 6 vertauscht werden, so lange ein vom Standard-Öffnungswinkel abweichender Winkel durch eine Verschiebung um die Differenz Δd bezüglich der Wiedergabefläche 34 berücksichtigt wird.

Nachfolgend wird anhand von Fig. 2 eine Übersicht über die verschiedenen Fallunterscheidungen gegeben, die sich auf eine kombinierte Fallunterscheidung dahingehend belaufen, daß zunächst in einem Block 20 unterschieden wird, ob der tatsächliche Öffnungswinkel der Kamera, also $\alpha_h$ gleich dem Standardöffnungswinkel $\alpha_{stdh}$ ist oder nicht. Wird diese Frage mit Ja beantwortet, so sind die Figuren 3 und 4 relevant.

Zur Unterscheidung, welche der Fig. 3 und 4 einschlägig ist, wird eine weitere Entscheidung dahingehend vorgenommen, ob der Schnittpunkt der Schallquellengeraden mit der Wiedergabefläche existiert oder nicht (21a). Wird diese Frage mit Ja beantwortet, so kann, wie es anhand von Fig. 3 dargestellt worden ist, unmittelbar aufgrund dieses Schnittpunkts 40' die Wiedergabeposition 40 berechnet und ausgegeben werden (22). Ist also der Öffnungswinkel der Kamera gleich dem vorbestimmten Öffnungswinkel, so wird auf der Basis des Schnittpunkts 40' zwischen der Geraden durch die Aufnahmeposition 72 der Schallquelle in dem Kamerakoordinatensystem und durch den gemeinsamen Ausgangspunkt der Kamera 30, also den Mittelpunkt der Projektionskugel 38 und der Wiedergabefläche 34 die Wiedergabeposition (40 oder 40') ermittelt und ausgegeben.

Wird die Frage des Blocks 21a dagegen mit Nein beantwortet, so wird, wie es anhand von Fig. 4 dargelegt worden ist, auf der Basis des Schnittpunkts 41' zwischen der Schallquellengeraden, die durch die Aufnahmeposition 73 einer Schallquelle im Kamerakoordinatensystem und den Nodal Point der Kamera bestimmt ist, und der Projektionskugel 38, die Wiedergabeposition berechnet und ausgegeben (Block 23 und 24). Hierbei sei darauf hingewiesen, daß in allen Fällen der Radius r der Projektionskugel 38, wie es insbesondere aus der links oben in Fig. 3 befindlichen Gleichung ersichtlich wird, von der Breite des Bildwandlers 34, die mit $s_w$ bezeichnet ist, und dem vorbestimmten Öffnungswinkel $\alpha_{stdh}$ abhängt.

Wird dagegen in dem Block 20 festgestellt, daß der tatsächliche Öffnungswinkel nicht gleich dem Standardöffnungswinkel ist, wird also auf die Frage im Block 20 die Antwort "Nein" erhalten, so wird in einem Block 21b wiederum festgestellt, ob die Schallquellengerade einen Schnittpunkt mit der Wiedergabefläche 34 hat oder nicht.

Wird diese Frage mit "Nein" beantwortet, so ist Fig. 5 einschlägig. Wird diese Frage dagegen mit "Ja" beantwortet, so ist Fig. 6 einschlägig.

Erfindungsgemäß wird in dem Fall, in dem die Frage im Block 21b mit Ja (Fig. 6) beantwortet wird, ein Schnittpunkt 63 zwischen einer Geraden durch die Aufnahmeposition der Schallquelle 60 in dem Kamerakoordinatensystem und einem von dem gemeinsamen Ausgangspunkt um eine Strecke M beabstandeten Definitionspunkt 65 und der Wiedergabefläche 34 berechnet. Dieser Wert wird noch ggf. skaliert (Punkt 64') und dann um eine Differenz 61 verschoben, um die Wiedergabeposition 64 zu berechnen, wobei sowohl die Strecke M als auch die Differenz 61 von dem Öffnungswinkel $\alpha_h$ der Kamera abhängen. Im einzelnen wird daher zunächst die Strecke M berechnet (Block 25). Dann wird der Schnittpunkt 63 der Schallquellengerade durch den Definitionspunkt 65 mit dem Bildwandler 34 berechnet, wobei dieser Schnittpunkt in Fig. 6 mit 63 bezeichnet ist (Block 26). Dann wird auf der Basis dieses Schnittpunkts 63 skaliert, um den Punkt 64' zu erhalten, der dann um die Differenz Δd, die in Fig. 6 mit 61 bezeichnet ist, in negative y-Richtung verschoben wird, da das Vorzeichen von Δd negativ ist. (Block 27). Dieser Punkt 64 wird dann in einem Block 28 als Wiedergabeposition der Schallquelle im Wiedergabe-Setting, wie z. B. in einem Kino, ausgegeben.

Wird die Frage im Block 21b dagegen mit Nein beantwortet, so ist Fig. 5 einschlägig. Zunächst wird wieder die Strecke M berechnet, um die Schallquellengerade durch die Schallquelle 72 und den Definitionspunkt 65 zu berechnen, der um die Strecke M von dem Mittelpunkt 50 der Projektionskugel in positiver y-Richtung verschoben ist. Hierauf wird, wie es in einem Block 29 angedeutet ist, der Schnittpunkt 51 der Schallquellengerade mit der Projektionskugel 38 berechnet, der in Fig. 5 mit 51 bezeichnet ist. Dieser Schnittpunkt 51 wird nun analog zum Block 27 skaliert, um den Punkt 53' zu erhalten, der dann um die Differenz Δd, die in Fig. 5 mit 52 bezeichnet ist, in positiver y-Richtung verschoben wird (Block 27), um schließlich die Position 53 der Schallquelle 72 zu erhalten und auszugeben (Block 28).

Es sei darauf hingewiesen, daß die in Fig. 2 dargestellte Abfolge der Berechnung der Strecke M, der Berechnung eines Schnittpunkts, der Skalierung und der Verschiebung des Schnittpunkts um Δd typischerweise unter Verwendung einer einzigen Gleichung implementiert werden kann. Bei einer Prozessor-basierten Implementierung beispielsweise innerhalb eines DSP kann diese Gleichung selbstverständlich schrittweise implementiert werden, wie es in Fig. 2 dargestellt ist. Die Gleichung kann jedoch auch "auf einen Schlag" berechnet werden, ohne daß dann eine Zwischenspeicherung von Zwischenergebnissen in einem DSP erforderlich ist.

An dieser Stelle sei darauf hingewiesen, daß die Strecke M in den Fig. 5 und 6 dazu führt, daß der Öffnungspunkt der Kamera, der ja in den Fig. 3 und 4 mit dem Ursprung des Kamerakoordinatensystems zusammenfiel, aufgrund der Strecke M ungleich 0 von dem Mittelpunkt 50 der Projektionskugel 38 entfernt ist, wobei der Öffnungspunkt der Kamera, der um die Strecke M ungleich 0 von dem Mittelpunkt 50 der Projektionskugel 38 entfernt ist, in den Fig. 5 und 6 als Referenzpunkt 65 dargestellt ist, der in diesem Fall zusammen mit der Schallquelle 72 bzw. 60 die entsprechende Schallquellengerade definiert, deren Schnittpunkt mit der Leinwand 34 bzw. der Projektionskugel 38 und unter Berücksichtigung der Skalierung und Verschiebung um die Differenz 52 bzw. 61 die Wiedergabeposition 40 bzw. 64 für eine spezielle Zoom-Einstellung, die von der Standard-Zoom-Einstellung abweicht, wiedergibt.

Während die Schallquellengerade somit bei den Fig. 3 und 4, also bei einer Standard-Öffnungswinkel-Einstellung, durch den gemeinsamen Ausgangspunkt verläuft, verläuft die Schallquellengerade bei einer anderen Zoom-Einstellung, also wenn die Fig. 5 und 6 betrachtet werden, durch den Referenzpunkt, der um die Strecke M von dem gemeinsamen Ausgangspunkt in positiver y-Richtung für eine vergrößerte Zoom-Einstellung oder in negativer y-Richtung für eine Weitwinkeleinstellung von dem gemeinsamen Ausgangspunkt verschoben ist.

Die vorstehenden Berechnungen, die anhand der Fig. 2 zusammengefaßt sind, um eine Wiedergabeposition einer Schallquelle in einem Kino-Setting zu erhalten, können entweder für jedes Kino einzeln berechnet werden. Erfindungsgemäß wird es jedoch bevorzugt, die Abbildungen auf eine Norm-Leinwandbreite zu beziehen, die beispielsweise eine Breite von 2 m hat. Hieraus ergeben sich dann Wiedergabepositionen von Schallquellen für einen Wiedergaberaum, bei dem die Wiedergabefläche eine Breite von 2 m hat. Die erhaltenen Positionskoordinaten in beispielsweise x, y und z, können dann, zur Übertragung auf ein anderes Wiedergabe-Szenario, bei dem die Breite der Wiedergabefläche zu 2 m unterschiedlich ist, einfach skaliert werden. Ist die Breite der Wiedergabefläche beispielsweise kleiner als die Norm-Wiedergabefläche, so können die erhaltenen Wiedergabepositionen ohne weiteres um das Verhältnis der Normbreite zur realen Breite skaliert werden. In dem Fall, in dem die reale Breite beispielsweise nur 1 m beträgt, müssen alle Koordinatenwerte halbiert werden. In dem Fall, in dem die reale Wiedergabebreite dagegen z. B. 10 m beträgt, müssen alle Koordinaten um den Faktor 5 multipliziert werden.

Dieses Vorgehen hat den Vorteil, daß die Wiedergabepositionen bereits vorausberechnet werden können und daß man in einem tatsächlichen Kino lediglich noch Skalierungen durchführen muß, ohne die kompletten anhand der Fig. 2 dargestellten Berechnungen ausführen zu müssen.

Dies hat den Vorteil, daß die Skalierung auf reelle Kinosituationen schnell und sicher vonstatten geht, ohne daß der Tonmeister beispielsweise in diesem Kino sich mit der kompletten Berechnung der Wiedergabepositionen beschäftigen muß.

Das erfindungsgemäße Konzept basiert somit auf der Unterscheidung, ob sich die Schallquelle auf der Norm-Leinwand befindet oder ob sie sich nicht auf der Norm-Leinwand befindet. Befindet sich die Schallquelle auf der Norm-Leinwand, so wird eine Berechnung auf der Basis der Fig. 3 und 6 durchgeführt, nämlich unter Verwendung einer Berechnung einer gedachten Strahlenoptik und unter Berechnung eines sogenannten Leaking-Camera-Modells. Damit wird der Schnittpunkt zwischen dem Punktstrahl und der Leinwand bestimmt.

Befindet sich die Schallquelle nicht auf der Norm-Leinwand, so wird eine Bestimmung des Schnittpunkts zwischen einer geraden Linie, nämlich der Schallquellengerade, und der Projektionskugel vorgenommen. Auf der Basis dieses Schnittpunkts ergibt sich die Schallquellenposition und folglich ein Winkel. Die Projektionskugel wird bezüglich ihres Mittelpunkts, wie es aus den Fig. 5 und 6 ersichtlich wird, abhängig von der Kamerazoomeinstellung verschoben. Im einzelnen ist der Mittelpunkt der Kugel identisch zu dem Nodal Point der Kamera für die Norm-Zoomeinstellung. In diesem Fall können die Winkel genauso reproduziert werden, wie sie in der realen Kameraaufnahmesituation waren. Dieser Fall wurde anhand der Fig. 3 und 4 dargestellt.

Im Falle einer Tele-Position, also Hineinzoomen, wird der Abstand zwischen dem Betrachter und der Schallquelle abnehmen, wie es bei 61 in Fig. 6 beispielsweise dargestellt ist, während im Falle einer Weitwinkeleinstellung, also in einem größeren Öffnungswinkel als der Öffnungswinkel des menschlichen Auges ist, der Abstand vom Betrachter zu der Schallquelle zunehmen wird. In den Fällen der Fig. 5 und 6 würde die Schallquelle daher von ihrer Position um Δd hinter die Leinwand bezogen auf den Mittelpunkt der Projektionskugel verschoben werden. Dieser Abstand zusammen mit dem Winkel, der durch die Schallquellengerade bestimmt wird, resultieren in einer Positionierung der Schallquelle im Wiedergabesetting als virtuelle Schallquelle. Dies führt dazu, daß ein Betrachter nicht nur einen visuellen dreidimensionalen Eindruck erhält, sondern auch einen audiomäßig gestalteten dreidimensionalen Eindruck, der mit dem visuellen Eindruck übereinstimmt.

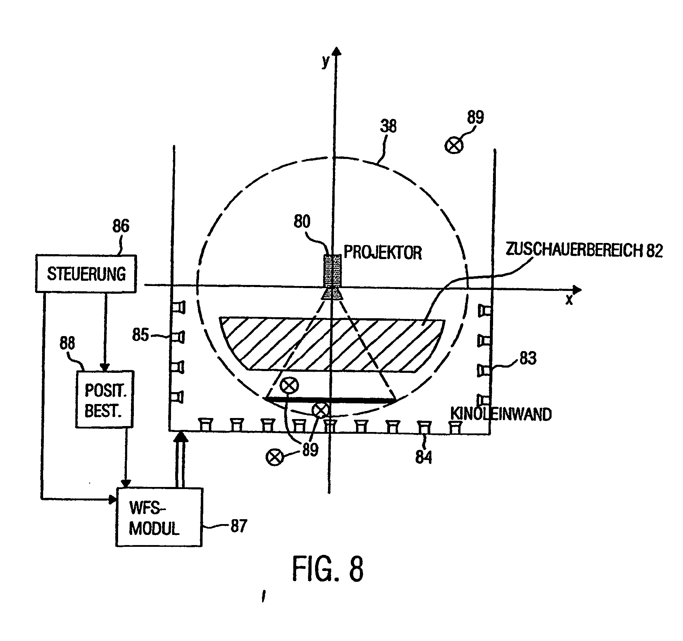

Nachfolgend wird anhand von Fig. 8 ein reales Kinosetting dargestellt, in dem aus Gründen der Illustration und der Vergleichbarkeit mit den Fig. 3, 4, 5 und 6 wieder die Projektionskugel 38 eingezeichnet ist. In dem Kino befindet sich ein Kinoprojektor 80 sowie ein Zuschauerbereich 82. Zu Zwecken der Wellenfeldsynthese sind in dem Kino ferner Lautsprecherarrays 83, 84, 85 dargestellt, die sich bei dem in Fig. 8 gezeigten Beispiel auf drei Seiten des Kinos erstrecken. Für eine bessere Darstellung wird es bevorzugt, auch hinter dem Projektor ein Lautsprecherarray anzubringen. Der Projektor 80 wird von einer Gesamtsteuerung 86 gesteuert, die zusätzlich auch ein Wellenfeldsynthesemodul 87 steuert. Das Wellenfeldsynthesemodul 87 erhält von einer Positionsbestimmungseinrichtung 88, die ebenfalls von der Steuerung 86 angesteuert wird, die Positionen der virtuellen Schallquellen. Die virtuellen Schallquellen sind in Fig. 8 mit 89 bezeichnet. Aus Fig. 8 ist zu sehen, daß virtuelle Schallquellen vor der Leinwand, hinter der Leinwand, sogar außerhalb des Kinos und insbesondere auch vor oder hinter dem Zuschauerbereich 82 plaziert werden können. Je nach Plazierung erzeugt das Wellenfeldsynthesemodul 87 entsprechende Amplituden- und Phasen-adaptierte Signale für die einzelnen Lautsprecher der Arrays 83, 84, 85. Die Überlagerung der von den einzelnen Lautsprechern ausgestrahlten Schallwellen führt dann dazu, daß ein Betrachter im Zuschauerbereich 82, der eine Überlagerung aller Schallwellen aller Lautsprecher mittels seiner Ohren empfängt, den Eindruck hat, daß der Schall von einer virtuellen Schallquelle an einer der Positionen 89 stammt.

Abhängig von den Gegebenheiten kann das erfindungsgemäße Verfahren zum Bestimmen einer Wiedergabeposition in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführen des Verfahrens realisiert werden, wenn das Computer-Programm auf einem Computer abläuft.

**Patentansprüche**

1.  Vorrichtung zum Bestimmen einer Wiedergabeposition (40, 41, 53, 64) einer Schallquelle für eine audiovisuelle Wiedergabe einer filmszene aus einer Mehrzahl von Einzelbildern bezüglich einer Wiedergabefläche (34) mit einer vorbestimmten Breite ($s_w$) und einer Projektionsquelle (80) mit einem Projektionsbezugspunkt, mit folgenden Merkmalen:

    einer Einrichtung (10) zum Bereitstellen einer Aufnahmeposition (72) der Schallquelle, einer Kameraposition (74) bei einer Aufnahme und eines Öffnungswinkels ($\alpha_h$) der Kamera bei der Aufnahme;
    einer Einrichtung (12) zum Transformieren der Aufnahmeposition der Schallquelle in ein Kamerakoordinatensystem, dessen Ursprung bezüglich einer Kameraöffnung definiert ist, um eine Aufnahmeposition der Schallquelle in dem Kamerakoordinatensystem zu erhalten;
    einer Einrichtung (14) zum Berechnen der Wiedergabeposition der Schallquelle bezüglich des Projektionsbezugspunkts, wobei die Einrichtung zum Berechnen ausgebildet ist, um den Projektionsbezugspunkt und die Kameraöffnung als gemeinsamen Ausgangspunkt (50) zu verwenden, und wobei die Einrichtung zum Berechnen wirksam ist,
    um im Falle eines Öffnungswinkels der Kamera, der gleich einem vorbestimmten Öffnungswinkel ($\alpha_{stdh}$) ist, auf der Basis eines Schnittpunkts (40') zwischen einer Geraden durch die Aufnahmeposition der Schallquelle (72) in dem Kamerakoordinatensystem und durch den gemeinsamen Ausgangspunkt (50) und der Wiedergabefläche (34) die Wiedergabeposition (40) zu berechnen, oder
    falls kein solcher Schnittpunkt existiert, auf der Basis eines Schnittpunkts (41') der Geraden mit einer Projektionskugel (38), deren Mittelpunkt der gemeinsame Ausgangspunkt (50) ist, und deren Radius (r) von der Breite der Wiedergabefläche (34) und dem vorbestimmten Öffnungswinkel ($\alpha_{stdh}$) abhängt, die Wiedergabeposition (41) zu berechnen, oder
    um im Falle eines Öffnungswinkels ($\alpha_h$) der Kamera, der von dem vorbestimmten Öffnungswinkel ($\alpha_{stdh}$) ab-

weicht,

auf der Basis eines Schnittpunkts (63) zwischen einer Geraden durch die Aufnahmeposition (60) der Schallquelle in dem Kamerakoordinatensystem und einem von dem gemeinsamen Ausgangspunkt (50) um eine Strecke (M) beabstandeten Referenzpunkt (65) und der Wiedergabefläche (34), und einer Verschiebung um eine Differenz (61) bezüglich der Wiedergabefläche (34) die Wiedergabeposition (64) zu berechnen, wobei die Strecke (M) und die Differenz (61) von dem Öffnungswinkel ($\alpha_h$) der Kamera abhängen, oder

falls kein solcher Schnittpunkt existiert, auf der Basis eines Schnittpunkts (51) der Geraden mit einer Projektionskugel (38), deren Mittelpunkt gleich dem gemeinsamen Ausgangspunkt ist, und einer Verschiebung um die Differenz (52) die Wiedergabeposition (53) zu berechnen.

2. Vorrichtung nach Anspruch 1, bei der der Projektionspunkt einer Blende eines Filmprojektors oder einem äquivalenten Punkt eines Beamers entspricht, in dem sich ausgegebene Lichtstrahlen schneiden.

3. Vorrichtung nach Anspruch 1 oder 2, bei der die Kameraöffnung ein Punkt ist, der einem Loch einer Lochkamera entspricht, durch die die Kamera modellierbar ist.

4. Vorrichtung nach einem der vorhergehenden Ansprüche, bei der der vorbestimmte Öffnungswinkel ein Öffnungswinkel in einer Normeinstellung ist, der auf einem mittleren Öffnungswinkel von Betrachtern der Wiedergabefläche (34) basiert.

5. Vorrichtung nach einem der vorhergehenden Ansprüche, bei der der vorbestimmte Öffnungswinkel ein Öffnungswinkel des menschlichen Auges ist, und bei etwa 27 Grad liegt.

6. Vorrichtung nach einem der vorhergehenden Ansprüche, bei der die Wiedergabefläche (34) eine Kinoleinwand ist, die um einen vorbestimmten Abstand von einem Filmprojektor oder Beamer beabstandet ist.

7. Vorrichtung nach einem der vorhergehenden Ansprüche, bei der Informationen über die Aufnahmeposition der Schallquelle und die Kameraposition bei der Aufnahme jedem Einzelbild zugeordnet sind, wobei sich die Informationen auf ein Weltkoordinatensystem beziehen, das einen Ursprung an einem Punkt eines realen Aufnahme-Sets oder an einem Punkt in einem virtuellen Studio hat.

8. Vorrichtung nach einem der vorhergehenden Ansprüche, bei der die Einrichtung (12) zum Transformieren ausgebildet ist, um neben der Kameraposition ferner eine oder mehrere Rotationen um Achsen des Kamerakoordinatensystems zu berücksichtigen.

9. Vorrichtung nach Anspruch 8, bei der der Radius (r) der Projektionskugel folgendermaßen gegeben ist:

$$r = s_w/(2 \cdot \sin{(\alpha_{stdh}/2)}),$$

wobei r der Radius der Projektionskugel ist,
wobei $s_w$ eine Breite der Wiedergabefläche ist,
wobei $\alpha_{stdh}$ der vorbestimmte Öffnungswinkel ist, und
wobei sin eine Sinus-Funktion darstellt.

10. Vorrichtung nach einem der vorhergehenden Ansprüche, bei der sich die Strecke (M) senkrecht zu der Wiedergabefläche (34) erstreckt und durch folgende Gleichung gegeben ist:

$$M = -(fl - r + h)$$

wobei M die Strecke ist,
wobei fl ein Abstand zwischen dem Referenzpunkt (65) und der Wiedergabefläche (34) ist, und
wobei h zwischen der Projektionskugel (38) und der Wiedergabefläche (34) in einem Bereich der Projektionskugel ist, der bezüglich des Referenzpunkts (65) hinter der Wiedergabeeinwand (34) angeordnet ist.

**11.** Vorrichtung nach Anspruch 10, bei der der Abstand fl durch folgende Gleichung gegeben ist:

$$\mathtt{fl = s_w/2 \cdot tan\ (\alpha_h/2)}$$

wobei $s_w$ eine Breite der Wiedergabefläche ist,
wobei $\alpha_h$ ein Öffnungswinkel der Kamera ist, und
wobei tan eine Tangens-Funktion darstellt.

**12.** Vorrichtung nach Anspruch 11, bei der eine Verschiebung um die Differenz (∆d) parallel zu der Abweichung um die Strecke (M) ausführbar ist.

**13.** Vorrichtung nach Anspruch 12, bei der die Differenz abhängig von einem Vorzeichen der Abweichung des Kameraöffnungswinkels vom Standardöffnungswinkel bestimmbar ist.

**14.** Vorrichtung nach einem der vorhergehenden Ansprüche, bei der im Falle eines aktuellen Öffnungswinkels der Kamera, der kleiner als der vorbestimmte Öffnungswinkel ist, die Differenz (∆d) positiv ist, und bei dem in einem anderen Fall, in dem ein aktueller Öffnungswinkel ($\alpha_h$) größer als der vorbestimmte Öffnungswinkel ist, die Differenz (∆d) negativ ist, so daß ein Abstand der Schallquelle (89) von einem Zuschauer (82) abnimmt, wenn die Differenz (∆d) positiv ist, und daß ein Abstand der Schallquelle (89) von dem Betrachter (82) zunimmt, wenn die Differenz (∆d) negativ ist.

**15.** Vorrichtung nach einem der Ansprüche 1 bis 14, bei der die Differenz (∆d) durch folgende Gleichung gegeben ist:

$$\mathtt{\Delta d = d \cdot (1 - fl_{std}/fl),}$$

wobei ∆d die Differenz ist,
wobei d ein Abstand der Schallquelle (72) im Kamerakoordinatensystem von dem Referenzpunkt (65) ist,
wobei $fl_{std}$ einen Abstand des gemeinsamen Ausgangspunkts (50) zu der Wiedergabefläche (34) ist, und
wobei $f_l$ ein Abstand des Referenzpunkts (50) zu der Wiedergabefläche (34) ist.

**16.** Vorrichtung nach einem der vorhergehenden Ansprüche, die ausgebildet ist, um die Wiedergabeposition einer Schallquelle mit einer Normbreite der Wiedergabefläche zu berechnen, und die ferner ausgebildet ist, um für eine Wiedergabe unter realen Gegebenheiten abhängig von einem Verhältnis der Normbreite der Wiedergabefläche und einer realen Breite einer Wiedergabefläche eine Skalierung der Wiedergabeposition durchzuführen.

**17.** Vorrichtung nach einem der vorhergehenden Ansprüche, bei der die Einrichtung (14) zum Berechnen ausgebildet ist, um einen Vektor zu einem Schnittpunkt (40', 41', 51, 63) unter Verwendung einer Länge eines Vektors (S") zu der Schallquellenposition zu skalieren, um die Wiedergabeposition (40, 41) bzw. einen Ausgangspunkt (53', 64') für die Verschiebung (52, 61) zu erhalten.

**18.** Vorrichtung nach Anspruch 17, bei der die Einrichtung (14) zum Berechnen ausgebildet ist, um den Vektor mit einem Skalierungsfaktor zu skalieren, der gleich einer Länge des Vektors (S") zu der Schallquellenposition geteilt durch die Länge des Vektors selbst ist.

**19.** Vorrichtung nach einem Anspruch 17, bei der die Einrichtung (14) zum Berechnen ausgebildet ist, um einen Abstand zwischen dem Schnittpunkt (40', 41', 51, 63) und der Wiedergabeposition (40, 41) bzw. dem Ausgangspunkt (53', 64') für die Verschiebung (52, 61) nichtlinear bezüglich der Länge des Vektors (S") zu der Schallquellenposition zu skalieren und/oder auf einen Maximalabstand zu begrenzen.

**20.** Verfahren zum Bestimmen einer Wiedergabeposition (40, 41, 53, 64) einer Schallquelle für eine audiovisuelle Wiedergabe einer Filmszene aus einer Mehrzahl von Einzelbildern bezüglich einer Wiedergabefläche (34) mit einer vorbestimmten Breite ($s_w$) und einer Projektionsquelle (80) mit einem Projektionsbezugspunkt, mit folgenden Schritten:

Bereitstellen (10) einer Aufnahmeposition (72) der Schallquelle, einer Kameraposition (74) bei einer Aufnahme und eines Öffnungswinkels ($\alpha_h$) der Kamera bei der Aufnahme;

Transformieren (12) der Aufnahmeposition der Schallquelle in ein Kamerakoordinatensystem, dessen Ursprung bezüglich einer Kameraöffnung definiert ist, um eine Aufnahmeposition der Schallquelle in dem Kamerakoordinatensystem zu erhalten;

Berechnen (14) der Wiedergabeposition der Schallquelle bezüglich des Projektionsbezugspunkts, wobei die Einrichtung zum Berechnen ausgebildet ist, um den Projektionsbezugspunkt und die Kameraöffnung als gemeinsamen Ausgangspunkt (50) zu verwenden, und wobei der Schritt des Berechnens wirksam ist,

um im Falle eines Öffnungswinkels der Kamera, der gleich einem vorbestimmten Öffnungswinkel ($\alpha_{stdh}$) ist,

auf der Basis eines Schnittpunkts (40') zwischen einer Geraden durch die Aufnahmeposition der Schallquelle (72) in dem Kamerakoordinatensystem und durch den gemeinsamen Ausgangspunkt (50) und der Wiedergabefläche (34) die Wiedergabeposition (40) zu berechnen, oder

falls kein solcher Schnittpunkt existiert, auf der Basis eines Schnittpunkts (41') der Geraden mit einer Projektionskugel (38), deren Mittelpunkt der gemeinsame Ausgangspunkt (50) ist, und deren Radius (r) von der Breite der Wiedergabefläche (34) und dem vorbestimmten Öffnungswinkel ($\alpha_{stdh}$) abhängt, die Wiedergabeposition (41) zu berechnen, oder

um im Falle eines Öffnungswinkels ($\alpha_h$) der Kamera, der von dem vorbestimmten Öffnungswinkel ($\alpha_{stdh}$) abweicht,

auf der Basis eines Schnittpunkts (63) zwischen einer Geraden durch die Aufnahmeposition (60) der Schallquelle in dem Kamerakoordinatensystem und einem von dem gemeinsamen Ausgangspunkt (50) um eine Strecke (M) beabstandeten Referenzpunkt (65) und der Wiedergabefläche (34), und einer Verschiebung um eine Differenz (61) bezüglich der Wiedergabefläche (34) die Wiedergabeposition (64) zu berechnen, wobei die Strecke (M) und die Differenz (61) von dem Öffnungswinkel ($\alpha_h$) der Kamera abhängen, oder

falls kein solcher Schnittpunkt existiert, auf der Basis eines Schnittpunkts der Geraden mit einer Projektionskugel (38), deren Mittelpunkt gleich dem gemeinsamen Ausgangspunkt ist, und einer Verschiebung um die Differenz (52) die Wiedergabeposition (53) zu berechnen.

21. Computer-Programm mit einem Programmcode zur Durchführung des Verfahren nach Patentanspruch 20, wenn das Programm auf einem Computer abläuft.

22. Vorrichtung zur Wiedergabe einer Filmszene mit einer Mehrzahl von Einzelbildern auf einer Wiedergabefläche, mit folgenden Merkmalen:

einer Einrichtung (88) zum Bereitstellen einer Wiedergabeposition einer Schallquelle gemäß einem der Ansprüche 1 bis 19,

einer Wellenfeldsyntheseeinrichtung (87) zum Erzeugen von Ansteuersignalen für eines oder mehrere Lautsprecherarrays (83, 84, 85), um für einen Zuschauer in einem Zuschauerbereich (82) eine virtuelle Wiedergabeposition (89) der Schallquelle zu simulieren.

## Claims

1. Device for determining a reproduction position (40, 41, 53, 64) of a source of sound for audio-visual reproduction of a film scene from a plurality of individual pictures with regard to a reproduction surface (34) having a predetermined width ($s_w$) and a projection source (80) having a projection reference point, the device comprising:

means (10) for providing a recording position (72) of the source of sound, a camera position (74) during recording, and an aperture angle ($\alpha_h$) of the camera during recording;

means (12) for transforming the recording position of the source of sound to a camera coordinate system, the origin of which is defined, in relation to a camera aperture, to obtain a recording position of the source of sound in the camera coordinate system;

means (14) for calculating the reproduction position of the source of sound in relation to the projection reference point, the means for calculating being configured to use the projection reference point and the camera aperture as a common starting point (50), and the means for calculating being operative,

in the case of an aperture angle of the camera which equals a predetermined aperture angle ($\alpha_{stdh}$),

to calculate the reproduction position (40) on the basis of an intersection point (40') between a straight line extending through the recording position of the source of sound (72) in the camera coordinate system and through the common starting point (50) and the reproduction surface (34), or

if no such intersection point exists, to calculate the reproduction position (41) on the basis of an intersection point (41') of the straight line with a projection sphere (38), the central point of which is the common starting point (50), and the radius (r) of which depends on the width of the reproduction surface (34) and the predetermined aperture angle ($\alpha_{stdh}$), or

in the case of an aperture angle ($\alpha_h$) of the camera which deviates from the predetermined aperture angle ($\alpha_{stdh}$), to calculate the reproduction position (64) on the basis of an intersection point (63) between a straight line extending through the recording position (60) of the source of sound in the camera coordinate system and a reference point (65), spaced away from the common starting point (50) by a distance (M), and the reproduction surface (34), and on the basis of a shift by a difference (61) in relation to the reproduction surface (34), the distance (M) and the difference (61) depending on the aperture angle ($\alpha_h$) of the camera, or

if no such intersection point exists, to calculate the reproduction position (53) on the basis of an intersection point (51) of the straight line with a projection sphere (38), the central point of which equals the common starting point, and on the basis of a shift by the difference (52).

2. Device as claimed in claim 1, wherein the projection point corresponds to an aperture of a film projector or to an equivalent point of a beamer, in which light rays which have been output intersect.

3. Device as claimed in claim 1 or 2, wherein the camera aperture is a point which corresponds to a hole of a hole camera by means of which the camera may be modeled.

4. The device as claimed in any of the previous claims, wherein the predetermined aperture angle is an aperture angle in a normal positioning based on a mean aperture angle of viewers of the reproduction surface (34).

5. Device as claimed in any of the previous claims, wherein the predetermined aperture angle is an aperture angle of the human eye and is about 27 degrees.

6. Device as claimed in any of the previous claims, wherein the reproduction surface (34) is a cinema screen spaced away from a film projector or beamer by a predetermined distance.

7. Device as claimed in any of the previous claims, wherein information about the recording position of the source of sound and the camera position during recording is associated with each individual picture, the information relating to a world coordinate system having its origin at a point of a real recording set or at a point in a virtual studio.

8. Device as claimed in any of the previous claims, wherein the means (12) for transforming is configured to take into account, in addition to the camera position, one or several rotations about axes of the camera coordinate system.

9. Device as claimed in claim 8, wherein the radius (r) of the projection sphere is specified as follows:

$$r = s_w/(2 \cdot \sin(\alpha_{stdh}/2)),$$

wherein r is the radius of the projection sphere,
wherein $s_w$ is a width of the reproduction surface,
wherein $\alpha_{stdh}$ is the predetermined aperture angle, and
wherein sin represents a sine function.

10. Device as claimed in any of the previous claims, wherein the distance (M) extends perpendicularly to the reproduction surface (34) and is specified by the following equation:

$$M = -(fl - r + h),$$

wherein M is the distance,
wherein fl is a distance between the reference point (65) and the reproduction surface (34), and

wherein h is located between the projection sphere (38) and the reproduction surface (34) in an area of the projection sphere which is arranged behind the reproduction screen (34) in relation to the reference point (65).

**11.** Device as claimed in claim 10, wherein the distance fl is given by the following equation:

$$\mathtt{fl\ =\ s_w/2\ \cdot\ tan\ (\alpha_h/2)},$$

wherein $s_w$ is a width of the reproduction surface,
wherein $\alpha_h$ is an aperture angle of the camera, and
wherein tan represents a tangent function.

**12.** Device as claimed in claim 11, wherein a shift may be conducted by the difference ($\Delta d$) in parallel with the deviation by the distance (M).

**13.** Device as claimed in claim 12, wherein the difference may be determined depending on a sign of the deviation of the camera's aperture angle from the standard aperture angle.

**14.** Device as claimed in any of the previous claims, wherein in the case of a current aperture angle of the camera which is smaller than the predetermined aperture angle, the difference ($\Delta d$) is positive, and wherein in another case, where a current aperture angle ($\alpha_h$) is larger than the predetermined aperture angle, the difference ($\Delta d$) is negative, so that a distance of the source of sound (89) from a viewer (82) decreases if the difference ($\Delta d$) is positive, and so that a distance of the source of sound (89) from the viewer (82) increases if the difference ($\Delta d$) is negative.

**15.** Device as claimed in any of claims 1 to 14, wherein the difference ($\Delta d$) is specified by the following equation:

$$\mathtt{\Delta d\ =\ d\ \cdot\ (1\ -\ fl_{std}/fl)},$$

wherein $\Delta d$ is the difference,
wherein d is a distance between the source of sound (72) in the camera coordinate system and the reference point (65),
wherein $fl_{std}$ is a distance between the common starting point (50) and the reproduction surface (34), and
wherein $f_1$ is a distance between the reference point (50) and the reproduction surface (34).

**16.** Device as claimed in any of the previous claims, which is configured to calculate the reproduction position of a source of sound with a normal width of the reproduction surface, and which is further configured to scale the reproduction position for a reproduction under real circumstances in dependence on a ratio of the normal width of the reproduction surface and a real width of a reproduction surface.

**17.** Device as claimed in any of the previous claims, wherein the means (14) for calculating is configured to scale a vector pointing to an intersection point (40', 41', 51, 63) using a length of a vector (S") pointing to the sound-source position to obtain the reproduction position (40, 41), or a starting point (53', 64') for the shift (52, 61).

**18.** Device as claimed in claim 17, wherein the means (14) for calculating is configured to scale the vector with a scaling factor which equals a length of the vector (S") pointing to the sound-source position, divided by the length of the vector itself.

**19.** Device as claimed in claim 17, wherein the means (14) for calculating is configured to scale a distance between the intersection point (40', 41', 51, 63) and the reproduction position (40, 41) and/or the starting point (53', 64') for the shift (52, 61) in a non-linear manner in relation to the length of the vector (S") pointing to the sound-source position, and/or to limit same to a maximum distance.

**20.** Method for determining a reproduction position (40, 41, 53, 64) of a source of sound for audio-visual reproduction of a film scene from a plurality of individual pictures with regard to a reproduction surface (34) having a predetermined width ($s_w$) and a projection source (80) having a projection reference point, the method comprising:

providing (10) a recording position (72) of the source of sound, a camera position (74) during recording, and an aperture angle ($\alpha_h$) of the camera during recording;

transforming (12) the recording position of the source of sound to a camera coordinate system, the origin of which is defined, in relation to a camera aperture, to obtain a recording position of the source of sound in the camera coordinate system;

calculating (14) the reproduction position of the source of sound in relation to the projection reference point, the means for calculating being configured to use the projection reference point and the camera aperture as a common starting point (50), and the step of calculating being operative,

in the case of an aperture angle of the camera which equals a predetermined aperture angle ($\alpha_{stdh}$),

to calculate the reproduction position (40) on the basis of an intersection point (40') between a straight line extending through the recording position of the source of sound (72) in the camera coordinate system and through the common starting point (50) and the reproduction surface (34), or

if no such intersection point exists, to calculate the reproduction position (41) on the basis of an intersection point (41') of the straight line with a projection sphere (38), the central point of which is the common starting point (50), and the radius (r) of which depends on the width of the reproduction surface (34) and the predetermined aperture angle ($\alpha_{stdh}$), or

in the case of an aperture angle ($\alpha_h$) of the camera which deviates from the predetermined aperture angle ($\alpha_{stdh}$),

to calculate the reproduction position (64) on the basis of an intersection point (63) between a straight line extending through the recording position (60) of the source of sound in the camera coordinate system and a reference point (65), spaced away from the common starting point (50) by a distance (M), and the reproduction surface (34), and on the basis of a shift by a difference (61) in relation to the reproduction surface (34), the distance (M) and the difference (61) depending on the aperture angle ($\alpha_h$) of the camera, or

if no such intersection point exists, to calculate the reproduction position (53) on the basis of an intersection point of the straight line with a projection sphere (38), the central point of which equals the common starting point, and on the basis of a shift by the difference (52).

21. Computer program having a program code for performing the method of claim 20 when the program runs on a computer.

22. Device for reproducing, on a reproduction surface, a film scene having a plurality of individual pictures, comprising:

means (88) for providing a reproduction position of a source of sound as claimed in any of claims 1 to 19,
wave-field synthesis means (87) for generating control signals for one or several loudspeaker arrays (83, 84, 85) to simulate a virtual reproduction position (89) of the source of sound for a viewer positioned in an audience area (82).

## Revendications

1. Dispositif pour déterminer une position de reproduction (40, 41, 53, 64) d'une source sonore pour une reproduction audiovisuelle d'une scène de film composée d'une pluralité d'images individuelles par rapport à une surface de reproduction (34) avec une largeur prédéterminée ($s_w$) et une source de projection (80) avec un point de référence de projection, aux caractéristiques suivantes :

un dispositif (10) destiné à préparer une position d'enregistrement (72) de la source sonore, une position de caméra (74) lors d'une enregistrement et un angle d'ouverture ($\alpha_h$) de la caméra lors de l'enregistrement ;
un dispositif (12) destiné à transformer la position d'enregistrement de la source sonore en un système de coordonnées de caméra dont l'origine et définie par rapport à une ouverture de caméra, pour obtenir une position d'enregistrement de la source sonore dans le système de coordonnées de caméra ;
un dispositif [14] destiné à calculer la position de reproduction de la source sonore par rapport au point de référence de projection, le dispositif destiné à calculer étant réalisé de manière à utiliser le point de référence de projection et l'ouverture de caméra comme point de départ commun (50), et le dispositif destiné à calculer étant actif,

pour, dans le cas d'un angle d'ouverture de la caméra qui est égal à un angle d'ouverture prédéterminé ($\alpha_{stdh}$),

calculer, sur base d'un point d'intersection (40') entre une droite passant par la position d'enregistrement de la source sonore (72) dans le système de coordonnées de caméra et par le point de départ commun (50) et la surface de reproduction (34), la position de reproduction (40), ou

s'il n'existe pas de tel point d'intersection, calculer, sur base d'un point d'intersection (41') de la droite avec une sphère de projection (38) dont le centre est le point de départ commun (50) et dont le rayon (r) est fonction de la largeur de la surface de reproduction (34) et de l'angle d'ouverture prédéterminé ($\alpha_{stdh}$), la position de reproduction (41), ou

pour, dans le cas d'un angle d'ouverture ($\alpha_h$) de la caméra qui diffère de l'angle d'ouverture prédéterminé ($\alpha_{stdh}$), calculer sur base d'un point d'intersection (63) entre une droite passant par la position d'enregistrement (60) de la source sonore dans le système de coordonnées de caméra et un point de référence (65) distant d'un trajet (M) du point de départ commun (50) et la surface de reproduction (34), et d'un décalage d'une différence (61) par rapport à la surface de reproduction (34), la position de reproduction (64), le trajet (M) et la différence (61) dépendant de l'angle d'ouverture ($\alpha_h$) de la caméra, ou

s'il n'existe pas de tel point d'intersection, calculer, sur base d'un point d'intersection (51) de la droite avec une sphère de projection (38) dont le centre est égal au point de départ commun, et d'un décalage de la différence (52), la position de reproduction (53).

2. Dispositif selon la revendication 1, dans lequel le point de projection correspond à un diaphragme d'un projecteur de film ou à un point équivalent d'un 'beamer' auquel se croisent les rayons lumineux sortis.

3. Dispositif selon la revendication 1 ou 2, dans lequel l'ouverture de caméra est un point qui correspond à un trou d'une caméra à sténopé par laquelle est modelable la caméra.

4. Dispositif selon l'une des revendications précédentes, dans lequel l'angle d'ouverture prédéterminé est un angle d'ouverture en une position normalisée basée sur un angle d'ouverture moyen d'observateurs de la surface de reproduction (34).

5. Dispositif selon l'une des revendications précédentes, dans lequel l'angle d'ouverture prédéterminé est un angle d'ouverture de l'oeil humain et est d'environ 27 degrés.

6. Dispositif selon l'une des revendications précédentes, dans lequel la surface de reproduction (34) est un écran de salle de cinéma qui est distant d'une distance prédéterminée d'un projecteur de film ou 'beamer'.

7. Dispositif selon l'une des revendications précédentes, dans lequel des informations sur la position d'enregistrement de la source sonore et la position de caméra lors de l'enregistrement sont associées à chaque image individuelle, les informations se rapportant à un système de coordonnées mondiales ayant une origine en un point d'un plateau d'enregistrement réel ou en un point dans un studio virtuel.

8. Dispositif selon l'une des revendications précédentes, dans lequel le dispositif (12) destiné à transformer est réalisé de manière à tenir compte, outre de la position de caméra, par ailleurs d'une ou plusieurs rotations autour d'axes du système de coordonnées de caméra.

9. Dispositif selon la revendication 8, dans lequel le rayon (r) de la sphère de projection est donné comme suit :

$$r = s_w/(2 \cdot \sin(\alpha_{stdh}/2)),$$

où r est le rayon de la sphère de projection,
où $s_w$ est une largeur de la surface de reproduction,
où $\alpha_{stdh}$ est l'angle d'ouverture prédéterminé, et
où sin représente une fonction sinusoïdale.

10. Dispositif selon l'une des revendications précédentes, dans lequel le trajet (M) s'étend perpendiculairement à la surface de reproduction {34) et est donné par l'équation suivante :

$$M = -(fl - r + h)$$

où M est le trajet,
où f1 est une distance entre le point de référence (65) et la surface de reproduction (34), et
ou h se trouve entre la sphère de projection (38) et la surface de reproduction (34) dans une zone de la sphère de projection disposée, par rapport au point de référence (65), derrière l'écran de reproduction (34).

11. Dispositif selon la revendication 10, dans lequel la distance fl est donnée par l'équation suivante :

$$fl - s_w/2 \cdot \tan(\alpha_h/2)$$

où $s_w$ est une largeur de la surface de reproduction,
où $\alpha_h$ est un angle d'ouverture de la caméra, et
où tan représente une fonction tangentielle.

12. Dispositif selon la revendication 11, dans lequel un déplacement de la différence ($\Delta d$) peut être réalisé parallèlement à l'écart du trajet (M).

13. Dispositif selon la revendication 12, dans lequel la différence peut être déterminée en fonction d'un signe de l'écart entre l'angle d'ouverture de caméra et l'angle d'ouverture standard.

14. Dispositif selon l'une des revendications précédentes, dans lequel, dans le cas d'un angle d'ouverture actuel de la caméra inférieur à l'angle d'ouverture prédéterminé, la différence ($\Delta d$) est positive, et
dans lequel, dans un autre cas où un angle d'ouverture actuel ($\alpha_h$) est supérieur à l'angle d'ouverture prédéterminé, la différence ($\Delta d$) est négative, de sorte qu'une distance entre la source sonore (89) et un spectateur (82) augmente lorsque la différence ($\Delta d$) est positive et qu'une distance entre la source sonore (89) et le spectateur (82) diminue lorsque la différence ($\Delta d$) est négative.

15. Dispositif selon l'une des revendications 1 à 14, dans lequel la différence ($\Delta d$) est donnée par l'équation suivante :

$$\Delta d = d \cdot (1 - fl_{std}/fl),$$

où Vd est la différence,
où d est une distance entre la source sonore (72) dans le système de coordonnées de caméra et le point de référence (65),
où $fl_{std}$ est une distance entre le point de départ commun (50) et la surface de reproduction (34), et
où fl est une distance entre le point de référence (50) et la surface de reproduction (34).

16. Dispositif selon l'une des revendications précédentes, qui est réalisé de manière à calculer la position de reproduction d'une source sonore avec une largeur normalisée de la surface de reproduction, et qui est, par ailleurs, réalisée de manière à réaliser, pour une reproduction dans des conditions réelles, en fonction d'un rapport entre la largeur normalisée de la surface de reproduction et une largeur réelle d'une surface de reproduction, une modulation de la position de reproduction.

17. Dispositif selon l'une des revendications précédentes, dans lequel le dispositif (14) destiné à calculer est réalisé de manière à moduler un vecteur vers un point d'intersection (40', 41', 51, 63) à l'aide d'une longueur d'un vecteur (S") vers la position de source sonore, pour obtenir la position de reproduction (40, 41) ou un point de départ (53', 64') pour le déplacement (52, 61).

18. Dispositif selon la revendication 17, dans lequel le dispositif (14) destiné à calculer est réalisé de manière à moduler le vecteur par un facteur de modulation qui est égal à une longueur du vecteur (S") vers la position de source sonore divisée par la longueur du vecteur lui-même.

19. Dispositif selon la revendication 17, dans lequel le dispositif (14) destiné à calculer est réalisé de manière à moduler une distance entre le point d'intersection (40', 41', 51, 63) et la position de reproduction (40, 41) ou le point de départ (53', 64') pour le déplacement (52, 61) de manière non linéaire par rapport à la longueur du vecteur (S") vers la position de source sonore et/ou à la limiter à une distance maximale.

**20.** Procédé pour déterminer une position de reproduction (40, 41, 53, 64) d'une source sonore pour une reproduction audiovisuelle d'une scène de film composée d'une pluralité d'images individuelles par rapport à une surface de reproduction (34) avec une largeur prédéterminée ($s_w$) et une source de projection (80) avec un point de référence de projection, aux étapes suivantes consistant à :

préparer (10) une position d'enregistrement (72) de la source sonore, une position de caméra (74) lors d'une enregistrement et un angle d'ouverture ($\alpha_h$) de la caméra lors de l'enregistrement ;

transformer (12) la position d'enregistrement de la source sonore en un système de coordonnées de caméra dont l'origine et définie par rapport à une ouverture de caméra, pour obtenir une position d'enregistrement de la source sonore dans le système de coordonnées de caméra ;

calculer [14] la position de reproduction de la source sonore par rapport au point de référence de projection, le dispositif destiné à calculer étant réalisé de manière à utiliser le point de référence de projection et l'ouverture de caméra comme point de départ commun (50), et l'étape de calcul étant active,

pour, dans le cas d'un angle d'ouverture de la caméra qui est égal à un angle d'ouverture prédéterminé ($\alpha_{stdh}$), calculer, sur base d'un point d'intersection (40') entre une droite passant par la position d'enregistrement de la source sonore (72) dans le système de coordonnées de caméra et par le point de départ commun (50) et la surface de reproduction (34), la position de reproduction (40), ou

s'il n'existe pas de tel point d'intersection, calculer, sur base d'un point d'intersection (41') de la droite avec une sphère de projection (38) dont le centre est le point de départ commun (50) et dont le rayon (r) est fonction de la largeur de la surface de reproduction (34) et de l'angle d'ouverture prédéterminé ($\alpha_{stdh}$), la position de reproduction (41), ou

pour, dans le cas d'un angle d'ouverture ($\alpha_h$) de la caméra qui diffère de l'angle d'ouverture prédéterminé ($\alpha_{stdh}$), calculer sur base d'un point d'intersection (63) entre une droite passant par la position d'enregistrement (60) de la source sonore dans le système de coordonnées de caméra et un point de référence (65) distant d'un trajet (M) du point de départ commun (50) et la surface de reproduction (34), et d'un décalage d'une différence (61) par rapport à la surface de reproduction (34), la position de reproduction (64), le trajet (M) et la différence (61) dépendant de l'angle d'ouverture ($\alpha_h$) de la caméra, ou

s'il n'existe pas de tel point d'intersection, calculer, sur base d'un point d'intersection (51) de la droite avec une sphère de projection (38) dont le centre est égal au point de départ commun, et d'un décalage de la différence (52), la position de reproduction (53).

**21.** Programme d'ordinateur avec un code de programme pour la mise en oeuvre du procédé selon la revendication 20 lorsque le programme est exécuté sur un ordinateur.

**22.** Dispositif de reproduction d'une scène de film avec une pluralité d'images individuelles sur une surface de reproduction, aux caractéristiques suivantes :

un dispositif (88) destiné à préparer une position de reproduction d'une source sonore selon l'une des revendications 1 à 19,

un dispositif de synthèse de champ de l'onde (87) destiné à générer des signaux d'activation pour une ou plusieurs rangées de haut-parleurs (83, 84, 85), pour simuler, pour un spectateur dans une zone de spectateurs (82), une position de reproduction virtuelle (89) de la source sonore.

BEREITSTELLEN VON
-AUFNAHMEPOSITIONEN DER SCHALLQUELLEN
-KAMERAPOSITION
-ÖFFNUNGSWINKEL DER KAMERA
~10

TRANSFORMIEREN DER AUFNAHMEPOS. DER
SCHALLQUELLEN IN DAS
KAMERAKOORDINATENSYSTEM
~12

BERECHNEN DER WIEDERGABEPOSITION
(FÜR STANDARDÖFFNUNGSWINKEL:
KAMERAÖFFNUNG=PROJEKTORÖFFNUNG)
~14

AUSGABEN DER WIEDERGABEPOSITIONEN
DER SCHALLQUELLEN BEZÜGLICH DER
WIEDERGABEFLÄCHE
~16

FIG. 1

```
┌─────────────────────────────────┐
│  TATSÄCHLICHER ÖFFNUNGSWINKEL    │ ╱ 20
│  GLEICH STANDARDÖFFNUNGSWINKEL   │
└─────────────────────────────────┘
        JA                NEIN
```

```
┌──────────────────┐              ┌──────────────────┐
│  SCHNITTPUNKT MIT │  21a    21b  │  SCHNITTPUNKT MIT │
│  WIEDERGABEFLÄCHE?│              │  WIEDERGABEFLÄCHE?│
└──────────────────┘              └──────────────────┘
  22    JA      NEIN   23      25    JA         NEIN   25
     (FIG.3)  (FIG.4)             (FIG.6)      (FIG.5)
```

```
┌──────────────┐  ┌──────────────┐  ┌──────────────┐  ┌──────────────┐
│ VERWENDEN DES │  │ BERECHNEN DES│  │ BERECHNEN DES│  │  BERECHNEN   │
│ SCHNITTPUNKTS │  │ SCHNITTPUNKTS│  │ DEFINITIONS- │  │   VON M      │
│ UND AUSGEBEN  │  │     MIT      │  │   PUNKTS     │  │              │
│               │  │ PROJEKTIONS- │  │ (STRECKE M)  │  │              │
│               │  │    KUGEL     │  │              │  │              │
└──────────────┘  └──────────────┘  └──────────────┘  └──────────────┘
                         │ 24              26 │              29 │
                         ▼                    ▼                 ▼
                  ┌──────────────┐  ┌──────────────┐  ┌──────────────┐
                  │ VERWENDEN DES│  │ SCHNITTPUNKT │  │ SCHNITTPUNKT │
                  │ SCHNITTPUNKTS│  │  DER NEUEN    │  │  MIT NEUER   │
                  │ UND AUSGEBEN │  │  GERADE +     │  │  KUGEL +     │
                  │              │  │  SKALIEREN    │  │  SKALIEREN   │
                  └──────────────┘  └──────────────┘  └──────────────┘
                                        27 │              27 │
                                           ▼                 ▼
                                    ┌──────────────┐  ┌──────────────┐
                                    │ VERSCHIEBEN  │  │ VERSCHIEBEN  │
                                    │   UM DIE     │  │   UM Δd      │
                                    │ DIFFERENZ Δd │  │              │
                                    └──────────────┘  └──────────────┘
                                        28 │              28 │
                                           ▼                 ▼
                                    ┌──────────────┐  ┌──────────────┐
                                    │  AUSGEBEN    │  │  AUSGEBEN    │
                                    └──────────────┘  └──────────────┘
```

# FIG.2
# (BERECHNEN DER WIEDERGABEPOSITION)

$$r = \frac{S_W}{2 \cdot \sin(\frac{\alpha_{Stdh}}{2})}$$

FIG. 3

$$fl = \frac{(\frac{S_W}{2})}{\tan(\frac{\alpha_h}{2})}$$

FIG. 4

28

$$r = \frac{S_w}{2 \cdot \sin(\frac{\alpha_{Stdh}}{2})} \quad ; \quad fl = \frac{(\frac{S_w}{2})}{\tan(\frac{\alpha_h}{2})} \quad ; \quad h = 2 \cdot r \cdot \sin^2 \frac{\alpha_{Stdh}}{4}$$

$$M = -(fl - r + h) \quad ; \quad \Delta d = d \cdot (1 - \frac{fl_{Stdh}}{fl}) \quad ;$$

## FIG. 5

FIG. 6

K: KAMERAVEKTOR
IM WELTKOORDINATEN-
SYSTEM

SCHALLQUELLE
AM PUNKT P

72

70

74

KAMERA-
KOORDINATEN-
SYSTEM

WELT-
KOORDINATEN-
SYSTEM

$$Rx = \begin{pmatrix} 1 & 0 & 0 \\ 0 & \cos(Tilt) & \sin(Tilt) \\ 0 & -\sin(Tilt) & \cos(Tilt) \end{pmatrix}$$

$$Ry = \begin{pmatrix} \cos(Roll) & 0 & -\sin(Roll) \\ 0 & 1 & 0 \\ \sin(Roll) & 0 & \cos(Roll) \end{pmatrix} \qquad Rz = \begin{pmatrix} \cos(Pan) & \sin(Pan) & 0 \\ -\sin(Pan) & \cos(Pan) & 0 \\ 0 & 0 & 1 \end{pmatrix}$$

$$S' = S - K \; ; \quad S'' = Rx \cdot Ry \cdot Rz \cdot S'$$

(LINEARE TRANSF.)      (ROTATORISCHE TRANSF.)

FIG. 7

FIG. 8